# EUROPEAN PATENT APPLICATION

(11) **EP 4 518 495 A1**
(43) Date of publication of application: **05.03.2025**
(21) Application number: 23795611.5
(22) Date of filing: 28.04.2023
(51) Int. Cl.: H04W 72/04

(54) **UPLINK TRANSMITTER SWITCHING METHOD AND RELATED DEVICE**

(30) Priority: 28.04.2022 CN 202210471294
(71) Applicant: China Telecom Corporation Limited, Beijing 100033 (CN)
(72) Inventor: NAN, Fang, Beijing 100033 (CN); ZHU, Jianchi, Beijing 100033 (CN); LIU, Guiqing, Beijing 100033 (CN); ZHANG, Xin, Beijing 100033 (CN); LI, Nanxi, Beijing 100033 (CN); SHE, Xiaoming, Beijing 100033 (CN); MAO, Congjie, Beijing 100033 (CN)
(74) Representative: Petraz, Gilberto Luigi
(86) International application number: PCT/CN2023/091518
(87) International publication number: WO 2023/208179

(57) **Abstract**

An uplink transmitter switching method, comprising: determining an antenna port state of the current uplink transmission of a terminal device, and an antenna port state of a previous uplink transmission of the terminal device, wherein the frequency band in which an uplink transmitter of the terminal device performs uplink transmission is dynamically switched between more than two frequency bands; if the antenna port state of the current uplink transmission of the terminal device and the antenna port state of the previous uplink transmission of the terminal device meet a preset condition, there being a switching interval for switching the frequency band in which the uplink transmitter performs uplink transmission; and canceling the reception of uplink information in the switching interval. Dynamic switching of an uplink transmitter between more than two uplink frequency bands is realized.

## Description

### CROSS-REFERENCE TO RELATED APPLICATIONS

The present disclosure is based upon and claims priority to Chinese Patent Application No. 202210471294.0, filed on April 28, 2022, and entitled "UPLINK TRANSMITTER SWITCHING METHOD, NETWORK DEVICE, TERMINAL DEVICE AND COMMUNICAITON SYSTEM", and the entire contents thereof are incorporated herein by reference.

### TECHNICAL FIELD

The present disclosure relates to the field of communication technology, and in particular, to an uplink transmitter switching method, a network device, a terminal device, a communication system, an electronic device, and a computer-readable storage medium.

### BACKGROUND

In the 5th Generation Mobile Communication Technology (5G), the super uplink technology, i.e., the uplink transmitter switching (UL Tx Switching) technology of terminal device, has completed the standardization of the super uplink in the Release 16 (Rel-16) of the 5G New Radio (NR) and the super uplink enhancement in the Rel-17 of the 5G New Radio (NR).

In the Rel-16 and Rel-17, the multi-carrier uplink transmission supports dynamic switching of a transmitter of a terminal device with two transmitters between two uplink bands configured by a Radio Resource Control (RRC) signalling.

Currently, the terminal device supporting two transmitters do not yet support dynamic transmitter switching among more than two uplink bands.

### SUMMARY

The present disclosure provides an uplink transmitter switching method, a network device, a terminal device, a communication system, an electronic device, and a computer-readable storage medium, which overcome, at least to a certain extent, the problem in the related art that the terminal device supporting two transmitters do not support dynamic transmitter switching among more than two uplink bands.

An aspect of the present disclosure provides an uplink transmitter switching method applied to a network device, including:
determining an antenna port state of a current uplink transmission of a terminal device and an antenna port state of a preceding uplink transmission of the terminal device, wherein an uplink transmission band for an uplink transmitter of the terminal device is dynamically switched among more than two bands;
if the antenna port state of the current uplink transmission of the terminal device and the antenna port state of the preceding uplink transmission of the terminal device meet a preset condition, a switching gap existing for the uplink transmitter to switch the uplink transmission band; and
omitting reception of uplink information during the switching gap.

In an embodiment of the present disclosure, the method further includes, before determining the antenna port state of the current uplink transmission of the terminal device and the antenna port state of the preceding uplink transmission of the terminal device:
transmitting uplink transmitter switching option configuration information to the terminal device, the uplink transmitter switching option configuration information configuring an uplink transmitter switching option as switched uplink or dual uplink.

In an embodiment of the present disclosure, the uplink transmitter switching option configuration information configures the uplink transmitter switching option as the dual uplink, and the preset condition is that:
the antenna port state of the current uplink transmission of the terminal device is a one-port uplink transmission on at least one carrier on a first band and a one-port uplink transmission on at least one carrier on a second band, wherein the first band and the second band are different bands of the more than two bands; and
the antenna port state of the preceding uplink transmission of the terminal device is a one-port uplink transmission on at least one carrier on one band of the more than two bands, and the terminal device supports a two-port uplink transmission in the one band; or
the antenna port state of the preceding uplink transmission of the terminal device is a two-port uplink transmission on the at least one carrier on the one band of the more than two bands.

In an embodiment of the present disclosure, the uplink transmitter switching option configuration information configures the uplink transmitter switching option as the dual uplink, and the preset condition is that:
the antenna port state of the current uplink transmission of the terminal device is a two-port uplink transmission on at least one carrier on a target band, and
the antenna port state of the preceding uplink transmission of the terminal device is a one-port uplink transmission on at least one carrier on a first band and a one-port uplink transmission on at least one carrier on a second band, wherein at least one of the first band and the second band is different from the target band, and the target band, the first band and the second band are bands of the more than two bands; or
the antenna port state of the preceding uplink transmission of the terminal device is a one-port uplink transmission on the at least one carrier on the target band, and the terminal device does not support a two-port uplink transmission in the target band.

In an embodiment of the present disclosure, the uplink transmitter switching option configuration information configures the uplink transmitter switching option as the dual uplink, and the preset condition is that:
the antenna port state of the preceding uplink transmission of the terminal device is a one-port uplink transmission on at least one carrier on at least one of a first band and a second band, and the terminal device supports a one-port uplink transmission in the first band and the second band; and
the antenna port state of the current uplink transmission of the terminal device is a one-port uplink transmission on at least one carrier on a third band, and there is no uplink transmission on the first band and the second band,
wherein the first band, the second band and the third band are different bands of the more than two bands.

In an embodiment of the present disclosure, the uplink transmitter switching option configuration information configures the uplink transmitter switching option as the dual uplink, and the preset condition is that:
the antenna port state of the preceding uplink transmission of the terminal device is a one-port uplink transmission on at least one carrier on at least one of a first band and a second band, and the terminal device supports a one-port uplink transmission in the first band and the second band; and
the antenna port state of the current uplink transmission of the terminal device is a one-port uplink transmission on at least one carrier on a first target band and a one-port uplink transmission on at least one carrier on a second target band, and at least one of the first target band and the second target band is a different band from the first band and the second band,
wherein the first band, the second band, the first target band, and the second target band are bands of the more than two bands.

In an embodiment of the present disclosure, the uplink transmitter switching option configuration information configures the uplink transmitter switching option as the dual uplink, and the preset condition is that:
the antenna port state of the current uplink transmission of the terminal device is a two-port uplink transmission on at least one carrier on a target band, and
the antenna port state of the preceding uplink transmission of the terminal device is a one-port or two-port uplink transmission on at least one carrier on a first band,
wherein the target band and the first band are different bands of the more than two bands.

In an embodiment of the present disclosure, the uplink transmitter switching option configuration information configures the uplink transmitter switching option as the dual uplink, and the preset condition is that:
the antenna port state of the current uplink transmission of the terminal device is a one-port uplink transmission on at least one carrier on a target band; and
the antenna port state of the preceding uplink transmission of the terminal device is a one-port uplink transmission on at least one carrier on a first band, and the terminal device supports a two-port uplink transmission in the first band; or
the antenna port state of the preceding uplink transmission of the terminal device is a two-port uplink transmission on the at least one carrier on the first band,
wherein the target band and the first band are different bands of the more than two bands.

In an embodiment of the present disclosure, the method further includes, before determining the antenna port state of the current uplink transmission of the terminal device and the antenna port state of the preceding uplink transmission of the terminal device:
determining an initial state of an antenna port of the uplink transmission of the terminal device,
wherein the initial state is a state of supporting a two-port uplink transmission on at least one carrier in one preset band, and the one preset band is a band of the more than two bands; or
the initial state is a state of respectively supporting a one-port uplink transmission in two preset bands, and the two preset bands are bands of the more than two bands.

In an embodiment of the present disclosure, the one preset band or the two preset bands are pre-set in a protocol or configured to the terminal device through the network device.

In an embodiment of the present disclosure, the uplink transmitter switching option configuration information configures the uplink transmitter switching option as the switched uplink, and the preset condition is that:
the antenna port state of the current uplink transmission of the terminal device is a one-port or two-port uplink transmission on at least one carrier on a target band, and
the antenna port state of the preceding uplink transmission of the terminal device is a one-port or two-port uplink transmission on at least one carrier on a first band,
wherein the target band and the first band are different bands of the more than two bands.

In an embodiment of the present disclosure, the method further includes, before determining the antenna port state of the current uplink transmission of the terminal device and the antenna port state of the preceding uplink transmission of the terminal device:
determining an initial state of an antenna port of the uplink transmission of the terminal device, the initial state being a state of supporting a two-port uplink transmission on at least one carrier in a preset band, and the preset band being a band of the more than two bands.

In an embodiment of the present disclosure, the preset band is pre-set in a protocol or configured to the terminal device through the network device.

In an embodiment of the present disclosure, the method further includes, before determining the antenna port state of the current uplink transmission of the terminal device and the antenna port state of the preceding uplink transmission of the terminal device:
receiving capability information of the terminal device, wherein the capability information includes one or more of: an uplink transmitter switching option supported by the terminal device being dual uplink or switched uplink, information of the more than two bands, and the terminal device supporting two uplink transmitters in each of the more than two bands; and
transmitting uplink transmitter switching configuration information to the terminal device, the uplink transmitter switching configuration information including one or more of: configuration information of the more than two bands and transmitter switching mode configuration information, wherein the transmitter switching mode configuration information configures the terminal device to support two uplink transmitters in each of the more than two bands.

In an embodiment of the present disclosure, the method further includes: if the antenna port state of the current uplink transmission of the terminal device and the antenna port state of the preceding uplink transmission of the terminal device do not meet the preset condition, not needing to set the switching gap.

Another aspect of the present disclosure provides an uplink transmitter switching method applied to a terminal device, including:
determining an antenna port state of a current uplink transmission and an antenna port state of a preceding uplink transmission, wherein an uplink transmission band for an uplink transmitter of the terminal device is dynamically switched among more than two bands; and
if the antenna port state of the current uplink transmission and the antenna port state of the preceding uplink transmission meet a preset condition, a switching gap existing for the uplink transmitter to switch the uplink transmission band; and
omitting transmission of uplink information during the switching gap.

Another aspect of the present disclosure provides a network device, including:
a first port state determining module, configured to determine an antenna port state of a current uplink transmission of a terminal device and an antenna port state of a preceding uplink transmission of the terminal device, wherein a band for an uplink transmitter of the terminal device is dynamically switched among more than two bands;
a first switching gap determining module, configured to, if the antenna port state of the current uplink transmission of the terminal device and the antenna port state of the preceding uplink transmission of the terminal device meet a preset condition, a switching gap exists for the uplink transmitter to switch the uplink transmission band; and
a first performing module, configured to omit reception of uplink information during the switching gap.

Another aspect of the present disclosure provides a terminal device, including:
a second port state determining module, configured to determine an antenna port state of a current uplink transmission and an antenna port state of a preceding uplink transmission, wherein a band for an uplink transmitter of the terminal device is dynamically switched among more than two bands; and
a second switching gap determining module, configured to, if the antenna port state of the current uplink transmission and the antenna port state of the preceding uplink transmission meet a preset condition, a switching gap exists for the uplink transmitter to switch the uplink transmission band; and
a second performing module, configured to omit transmission of uplink information during the switching gap.

Another aspect of the present disclosure provides a communication system, including a network device and a terminal device,
the network device is configured to: determine an antenna port state of a current uplink transmission of the terminal device and an antenna port state of a preceding uplink transmission of the terminal device, wherein a band for an uplink transmitter of the terminal device is dynamically switched among more than two bands;
if the antenna port state of the current uplink transmission of the terminal device and the antenna port state of the preceding uplink transmission of the terminal device meet a preset condition, a switching gap exists for the uplink transmitter to switch the uplink transmission band; and
omit reception of uplink information during the switching gap, and
the terminal device is configured to: determine the antenna port state of the current uplink transmission and the antenna port state of the preceding uplink transmission, wherein the band for the uplink transmitter of the terminal device is dynamically switched among the more than two bands; and
if the antenna port state of the current uplink transmission and the antenna port state of the preceding uplink transmission meet the preset condition, the switching gap exists for the uplink transmitter to switch the uplink transmission band; and
omit transmission of the uplink information during the switching gap.

Another aspect of the present disclosure provides an electronic device, including a processor and a memory for storing executable instructions of the processor, wherein the processor is configured to perform, by executing the executable instructions, the uplink transmitter switching method described above.

Another aspect of the present disclosure provides a computer-readable storage medium having stored thereon a computer program, and the computer program, when being executed by a processor, implements the uplink transmitter switching method described above.

An embodiment of the present disclosure further provides a computer program product including a computer program, and the computer program, when being executed by a processor, implements the uplink transmitter switching method described above.

It should be understood that the above general description and the detailed description that follows are exemplary and explanatory only and do not limit the present disclosure.

### BRIEF DESCRIPTION OF THE DRAWINGS

The accompanying drawings herein are incorporated into and form a part of the specification, illustrate embodiments consistent with the present disclosure, and are used in conjunction with the specification to explain the principles of the present disclosure. Obviously, the accompanying drawings in the following description are only some of the embodiments of the present disclosure, and a person skilled in the art may obtain other accompanying drawings from these drawings without creative labor.
FIG. 1 illustrates a diagram of a communication system architecture in an embodiment of the present disclosure;
FIG. 2 illustrates a flowchart of an uplink transmitter switching method provided by an embodiment of the present disclosure;
FIG. 3 illustrates a flowchart of an uplink transmitter switching method provided by another embodiment of the present disclosure;
FIG. 4 illustrates a flowchart of an uplink transmitter switching method under a switched uplink configuration provided by an embodiment of the present disclosure;
FIG. 5 illustrates a flowchart of an uplink transmitter switching method under a dual uplink configuration provided by an embodiment of the present disclosure;
FIG. 6 illustrates a flowchart of an uplink transmitter switching method under a dual uplink configuration provided by yet another embodiment of the present disclosure;
FIG. 7 illustrates a flowchart of an uplink transmitter switching method under a dual uplink configuration provided by another embodiment of the present disclosure;
FIG. 8 illustrates a flowchart of an uplink transmitter switching method under a dual uplink configuration provided by another embodiment of the present disclosure;
FIG. 9 illustrates a flowchart of an uplink transmitter switching method under a dual uplink configuration provided by another embodiment of the present disclosure;
FIG. 10 illustrates a flowchart of an uplink transmitter switching method under a dual uplink configuration provided by another embodiment of the present disclosure;
FIG. 11 illustrates a flowchart of an uplink transmitter switching method provided by another embodiment of the present disclosure;
FIG. 12 illustrates a flowchart of an uplink transmitter switching method provided by yet another embodiment of the present disclosure;
FIG. 13 illustrates a schematic diagram of a network device provided by an embodiment of the present disclosure;
FIG. 14 illustrates a schematic diagram of a terminal device provided by an embodiment of the present disclosure;
FIG. 15 illustrates a schematic diagram of a communication system provided by an embodiment of the present disclosure; and
FIG. 16 illustrates a structural block diagram of an electronic device provided by an embodiment of the present disclosure.

### DETAILED DESCRIPTION

Example embodiments will now be described more fully with reference to the accompanying drawings. However, the example embodiments may be implemented in a variety of forms and should not be construed as being limited to the examples set forth herein; rather, these embodiments are provided so that the present disclosure is more comprehensive and complete and the idea of the example embodiments is conveyed to a person skilled in the art in a comprehensive manner. The features, structures, or characteristics described may be combined in one or more embodiments in any suitable manner.

In addition, the accompanying drawings are only schematic illustrations of the present disclosure and are not necessarily to scale. The same reference numerals in the drawings indicate the same or similar parts, and thus repeated descriptions thereof will be omitted. Some of the block diagrams shown in the accompanying drawings are functional entities that do not necessarily have to correspond to physically or logically separate entities. These functional entities may be implemented in software form, or in one or more hardware modules or integrated circuits, or in different networks and/or processor devices and/or microcontroller devices.

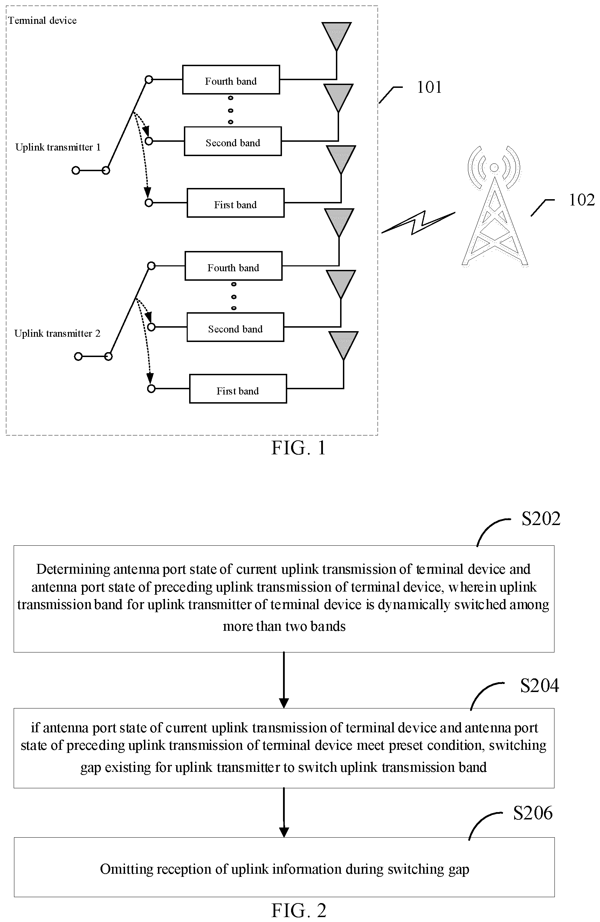

FIG. 1 illustrates a schematic diagram of an exemplary communication system architecture that may be applied to an uplink transmitter switching method of an embodiment of the present disclosure.

As shown in FIG. 1, the communication system may include a terminal device 101, a network, and a core network.

The network is used to provide a medium of a communication link between the terminal device 101 and the core network, which may be a wired network or a wireless network.

Optionally, the wireless network or wired network described above uses standard communication technologies and/or protocols. The network is typically the Internet, but may be any network including, but not limited to, a Local Area Network (LAN), Metropolitan Area Network (MAN), Wide Area Network (WAN), mobile, wired or wireless network, private network, or virtual private network, or any combination thereof). In some embodiments, a technique and/or format including Hyper Text Mark-up Language (HTML), Extensible MarkupLanguage (XML), and the like is used to represent the number of exchanges over the network. Further, a conventional encryption technique such as Secure Socket Layer (SSL), Transport Layer Security (TLS), Virtual Private Network (VPN), Internet Protocol Security (IPsec) and the like may also be used to encrypt all or some links. In other embodiments, a customized and/or dedicated data communication techniques may also be used instead of or in addition to the above described data communication techniques.

The communication system may employ different communication techniques, such as Code Division Multiple Access (CDMA), Wideband Code Division Multiple Access (WCDMA), Time Division Multiple Access (TDMA), Frequency Division Multiple Access (FDMA), Orthogonal Frequency-division Multiple Access (OFDMA), Single-Carrier FDMA (SCFDMA), Carrier Sense Multiple Access with Collision Avoidance. Depending on the capacity, rate, latency, and other factors of different networks, the network may be classified as a 2G (generation) network, a 3G network, a 4G network, or a future evolution network such as a 5G network, which is simply referred to as a network or system. In the present disclosure, the network includes a network device 102, which may be, for example, a wireless access network node; and the core network includes a core network device. Wherein the wireless access network node may also be a base station. The network may provide network services to the terminal device 101 via the network device 102.

The terminal device 101, which may be referred to as a user device, a mobile terminal, a terminal, a mobile station, etc., is a device that provides voice and/or data connectivity to a user, and the terminal device 101 may be a variety of electronic devices including, but not limited to, a smartphone, a tablet computer, a laptop computer, a desktop computer, a wearable device, an augmented reality device, a virtual reality device, and the like.

In some embodiments, the clients of the application installed in different terminal devices 101 are the same, or are clients of the same type of application based on different operating systems. Based on different terminal platforms, the specific form of the client of the application may also be different, for example, the client of the application may be a mobile phone client, a PC client, and the like.

In order to further enhance the uplink data rate, spectrum utilization and uplink capacity, in the present disclosure, the terminal device 101 supports dynamic switching of two uplink transmitters among more than two bands, such as switching among three or four bands. The uplink transmitter of the terminal device 101 is dynamically switched among more than two bands, i.e., the band on which the uplink transmitter performs the uplink transmission is dynamically switched among more than two bands. In FIG. 1, the terminal device 101 includes an uplink transmitter 1 and an uplink transmitter 2, and both the uplink transmitter 1 and the uplink transmitter 2 may switch among a first band ~ a fourth band.

For example, the uplink transmitter 1 is input with a signal source and outputs a first band signal through frequency multiplication, mixing, filtering, amplification, and other processing of the signal source by the uplink transmitter 1, and the uplink transmitter 2 is input with a signal source and similarly outputs a first band signal through frequency multiplication, mixing, filtering, amplification, and other processing of the signal source by the uplink transmitter 2. The two first band signals generated by the uplink transmitter 1 and the uplink transmitter 2 may be used for the uplink transmission of one antenna port or two antenna ports. The antenna port is also referred to as a port. Each band may include one or more carriers. The uplink transmission may be performed on one or more carriers of the first band.

For example, if the uplink transmitter 1 outputs a first band signal and the uplink transmitter 2 outputs a second band signal, the first band signal may be used for a one-port uplink transmission on one or more carriers on the first band, and the second band signal may be used for a one-port uplink transmission on one or more carriers on the second band.

Since the uplink transmitter switching among different bands needs a switching gap, and the terminal device 101 cannot perform the uplink transmission during the switching gap, it is necessary to know when the uplink transmitter of the terminal device 101 has switched, and thus to determine the switching gap.

Based on this, an embodiment of the present application provides a scheme relating to communication and other technologies, which is a software program applied in a computer, in which a band for an uplink transmitter of a terminal device may be dynamically switched among more than two bands, and when an antenna port state of a current uplink transmission and an antenna port state of a preceding uplink transmission meet a preset condition, it determines that the uplink transmitter of the terminal device switches the uplink band, and there is a switching gap during which the uplink transmission cannot be performed due to the transmitter switching, so that two transmitters of the terminal device may dynamically switch among more than two uplink bands, which ensures reception performance of the uplink transmission, and improves NR uplink rate, spectrum utilization and uplink capacity, as illustrated by the following embodiments.

An embodiment of the present disclosure provides an uplink transmitter switching method, which may be executed by any system having computational processing capability.

FIG. 2 illustrates a flowchart of an uplink transmitter switching method provided by an embodiment of the present disclosure. As shown in FIG. 2, the uplink transmitter switching method provided by the embodiment of the present disclosure is applied to a network device, and includes the following steps.

In S202, an antenna port state of a current uplink transmission of a terminal device and an antenna port state of a preceding uplink transmission of the terminal device are determined, wherein an uplink transmission band for an uplink transmitter of the terminal device is dynamically switched among more than two bands.

In an embodiment, the uplink transmitter of the terminal device has a capability in which the band for the uplink transmission may be dynamically switched among more than two bands, and the capability may be transmitted from the terminal device to the network device via capability information.

Since the network device may not directly determine whether the uplink transmitter performs band switching, the present disclosure uses a change in the antenna port states of the current and preceding uplink transmissions to determine timing of band switching of the uplink transmitter.

In S204, if the antenna port state of the current uplink transmission of the terminal device and the antenna port state of the preceding uplink transmission of the terminal device meet a preset condition, a switching gap exists for the uplink transmitter to switch the uplink transmission band.

The preset condition of the present embodiment is the antenna port state of the current uplink transmission of the terminal device and the antenna port state of the preceding uplink transmission, which are prestored. The antenna port state of the uplink transmission is compared with the pre-stored antenna port state to determine the timing of the band switching of the uplink transmitter. It is to be noted that when the antenna port state of the current uplink transmission and the antenna port state of the preceding uplink transmission of the terminal device meet the pre-set condition, it indicates that the uplink transmitter starts performing the band switching, and that the switching gap exists for the uplink transmitter to switch the uplink transmission band so that the uplink transmitter switches the band for the uplink transmission among different bands during the switching gap. When the antenna port state of the current uplink transmission and the antenna port state of the preceding uplink transmission of the terminal device do not meet the preset conditions, it indicates that the uplink transmitter does not perform the band switching, the switching gap may not be set, and the terminal device may normally perform the uplink transmission without the band switching performed by the uplink transmitter.

For example, the switching gap may be pre-configured by the network device via RRC signaling, or may be reported by the terminal device, or may be a pre-set fixed time gap, for example, 35 µs, 140 µs, or 210 µs. It is to be noted that the switching gap is not less than a time length that is used by the uplink transmitter to perform the band switching. The time length of the switching gap is not specifically limited in the present disclosure. For the different cases, i.e., the band switching for the uplink transmission performed by the transmitter when an uplink transmitter switching option is switched uplink, and the band switching for the uplink transmission performed by the transmitter when the uplink transmitter switching option is dual uplink, the switching gaps of the same time length may be used, or the switching gaps of different time lengths may be used, which is not specifically limited in the present disclosure.

In S206, reception of uplink information is omitted during the switching gap.

In an embodiment, it determines according to the antenna port state of the uplink transmission of the terminal device that the uplink transmitter of the terminal device starts band switching, and during the switching gap, the network device omits the reception of the uplink information transmitted by the terminal device.

In the uplink band switching method provided by the embodiment of the present disclosure, the band for the uplink transmitter of the terminal device may be dynamically switched among more than two bands, the network device determines that whether the antenna port state of the current uplink transmission and the antenna port state of the preceding uplink transmission meet the preset condition, and when the preset condition is met, it determines that the uplink transmitter of the terminal device switches the uplink band, and there is the switching gap during which the uplink transmission cannot be performed due to the transmitter switching, so that the uplink transmitter of the terminal device may dynamically switch among more than two uplink bands, which ensures reception performance of the uplink transmission, and improves NR uplink rate, spectrum utilization and uplink capacity.

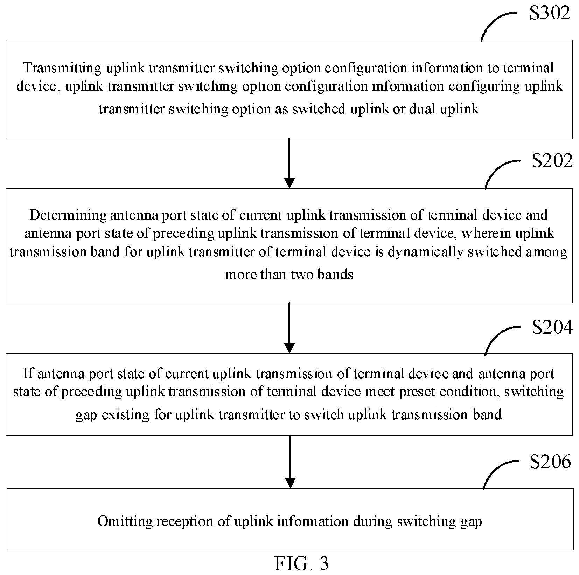

FIG. 3 illustrates a flowchart of another uplink transmitter switching method provided by an embodiment of the present disclosure. As shown in FIG. 3, the uplink transmitter switching method of the embodiment includes S302 and S202~S206, i.e., before determining the antenna port state of the current uplink transmission of the terminal device and the antenna port state of the preceding uplink transmission of the terminal device in S202, the method further includes:

S302, transmitting uplink transmitter switching option configuration information to the terminal device, the uplink transmitter switching option configuration information configuring an uplink transmitter switching option (uplink Tx switching option) as switched uplink or dual uplink.

S202~S206 are implemented in the same manner as the above embodiments, which will not be repeated here.

It is to be noted that the terminal device of the present disclosure has a capability of supporting two or more uplink transmitters to perform uplink transmission on at least one carrier of only one band at the same time, i.e., supporting the switched uplink, and/or the terminal device has the capability of supporting two or more uplink transmitters to perform uplink transmission on at least one carrier of each of different bands at the same time, i.e., supporting the dual uplink. The above different capabilities of the terminal device are classified by the uplink transmitter switching option. In the present disclosure, the case where the terminal device supports two uplink transmitters is illustrated as an example, and the case where the terminal device supports more than two uplink transmitters may be modified adaptively.

For example, the uplink transmitter switching option configuration information may be configured by the network device to the terminal device via RRC signaling. Depending on the capability of the terminal device, the uplink transmitter switching option configuration information transmitted by the network device configures the uplink transmitter switching option to be either the switched uplink or the dual uplink, thereby configuring different switching manners.

In an embodiment, the uplink transmitter switching option is the switched uplink, which is used to indicate that the terminal device supporting two uplink transmitters may only perform the uplink transmission on a carrier of one band at the same time. The switched uplink may be used in the scene of multi-carrier uplink transmission, for example, multi-carrier uplink transmission including Supplementary Uplink (SUL) carrier, or multi-carrier uplink transmission of inter-band Carrier Aggregation (CA).

When the uplink transmitter switching option configuration information configures the uplink transmitter switching option to be the switched uplink, the terminal device supporting two uplink transmitters may only perform the uplink transmission on a carrier of one band at the same time. In the present disclosure, the case where the terminal device performs the uplink transmission on carriers of three bands or four bands is illustrated.

It is to be noted that for the case where the terminal device supporting two uplink transmitters performs the uplink transmission on carriers of other more than two bands, adaptive modifications may be made by referring to the above embodiment of the present disclosure, which are also within the protection scope of the present disclosure.

Table 1 illustrates possible cases of states of two uplink transmitters of the terminal device on three bands and an antenna port state of the uplink transmission under a switched uplink scene. The number of uplink transmitters on different bands and the number of the antenna ports for the uplink transmission on a corresponding band are used to characterize the uplink transmitter state and the uplink antenna port state of the terminal device.

**Table 1**

| Case | Number of uplink transmitters of band A + Number of uplink transmitters of band B + Number of uplink transmitters of band C (xT indicates x uplink transmitters) | Number of uplink transmission antenna ports of band A + Number of uplink transmission antenna ports of band B + Number of uplink transmission antenna ports of band C (xP indicates there being at most x antenna ports on each carrier of corresponding band) |
|---|---|---|
| Case 1 | 2T+0T+0T | 2P+0P+0P or 1P+0P+0P |
| Case 2 | 0T+2T+0T | 0P+2P+0P or 0P+1P +0P |
| Case 3 | 0T+0T+2T | 0P+0P+2P or 0P+0P+1P |

As shown in Table 1, under the switched uplink scene, the states of two uplink transmitters on three bands include three cases, i.e., the number of uplink transmitters on one band is two, the numbers of uplink transmitters on the other bands are zero, and accordingly, the number of antenna ports for the uplink transmission on one band is classified into two cases, i.e., the number of antenna ports for the uplink transmission on that band is two or one.

Table 2 illustrates possible cases of states of two uplink transmitters of the terminal device on four bands and an antenna port state of the uplink transmission under a switched uplink scene.

**Table 2**

| Case | Number of uplink transmitters of band A + Number of uplink transmitters of band B + Number of uplink transmitters of band C+ Number of uplink transmitters of band D/xT indicates x uplink transmitters | Number of uplink transmission antenna ports of band A + Number of uplink transmission antenna ports of band B + Number of uplink transmission antenna ports of band C+ Number of uplink transmission antenna ports of band D/xP indicates there being at most x antenna ports on each carrier of corresponding band |
|---|---|---|
| Case 1 | 2T+0T+0T+0T | 2P+0P+0P+0P or 1P+0P+0P+0P |
| Case 2 | 0T+2T+0T+0T | 0P+2P+0P+0P or 0P+1P+0P+0P |
| Case 3 | 0T+0T+2T+0T | 0P+0P+2P+0P or 0P+0P+1P+0P |
| Case 4 | 0T+0T+0T+2T | 0P+0P+0P+2P or 0P+0P+0P+1P |

As shown in Table 2, under the switched uplink scene, the states of two uplink transmitters on four bands include four cases, i.e., the number of uplink transmitters on one band is two, the numbers of uplink transmitters on the other bands are zero, and accordingly, the number of antenna ports for the uplink transmission on one band is classified into two cases, i.e., the number of antenna ports for the uplink transmission on that band is two or one.

In Table 1 or Table 2, if the uplink transmitter states of the current uplink transmission and the preceding uplink transmission belong to different cases, the terminal device needs to perform uplink transmitter switching, a switching gap for the uplink transmitter of the terminal device to switch the uplink transmission band is required, and the terminal device may not perform the uplink transmission during the switching gap. If the current state of the uplink transmitter of the terminal device is that the number of uplink transmitters on a first band of the three bands or the four bands is 2T, and the number of uplink transmitters on the remaining bands thereof is 0T, and the uplink transmitter state of the terminal device in a next uplink transmission is that the uplink transmission is on at least one carrier of a second band of the remaining bands, the uplink transmitter of the terminal device performs band switching, and the uplink transmitter state after the switching is that the number of uplink transmitters on the second band is 2 T and the number of uplink transmitters on the other bands is 0 T. For example, when the uplink transmission band for the uplink transmitter of the terminal device is switched among three bands, in which the first band is band A and the second band is band B, the transmitter state is switched from Case 1 to Case 2.

Since the network device (e.g., a base station) determines the uplink transmitter state using the antenna port state of the uplink transmission, the switching gap during which the terminal device may not perform the uplink transmission due to the uplink transmitter switching may be determined as follows: when the terminal device performs the one-port or two-port uplink transmission on at least one carrier on one band, and the preceding uplink transmission of the terminal device is the one-port or two-port uplink transmission on at least one carrier on another band, the terminal device does not perform an uplink transmission on a carrier of any band during the switching gap.

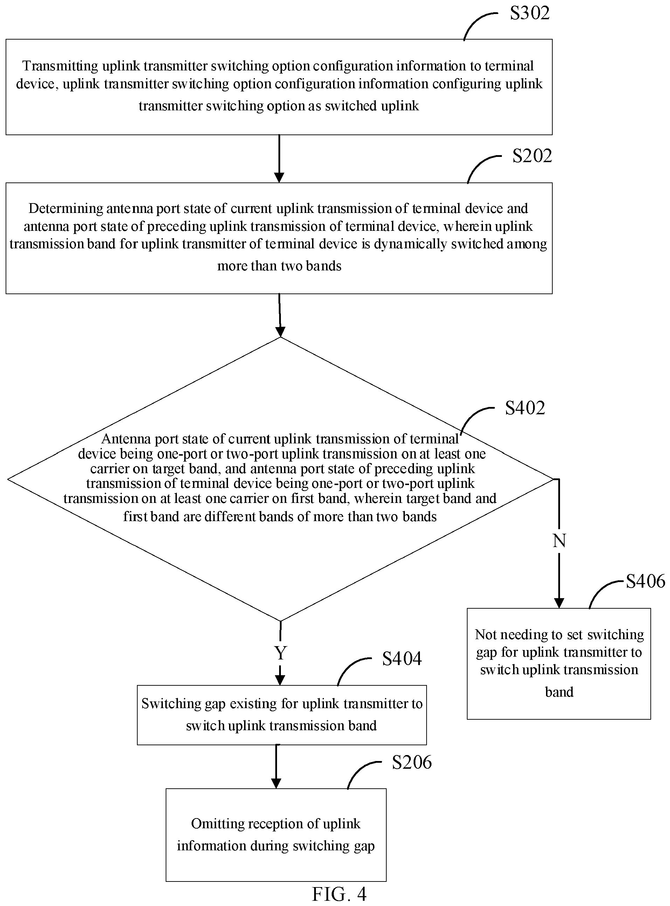

FIG. 4 illustrates a flowchart of an uplink transmitter switching method under switched uplink configuration provided by an embodiment of the present disclosure. The embodiment further refines S204 into S402~S406 on the basis of FIG. 3. As shown in FIG. 4, the method includes S202, S206, S302, and S402~S406, and specifically includes:
S302, transmitting uplink transmitter switching option configuration information to the terminal device, the uplink transmitter switching option configuration information configuring an uplink transmitter switching option as the switched uplink;
S402, presetting the condition as that: the antenna port state of the current uplink transmission of the terminal device is a one-port or two-port uplink transmission on at least one carrier on a target band, and
the antenna port state of the preceding uplink transmission of the terminal device is a one-port or two-port uplink transmission on at least one carrier on a first band,
wherein the target band and the first band are different bands of more than two bands;
S404, if the preset condition is met, a switching gap existing for the uplink transmitter to switch the uplink transmission band;
S406, if the preset condition is not met, not needing to set the switching gap for the uplink transmitter to switch the uplink transmission band.

It is to be noted that S202, S206 are the same as the above embodiments, which will not be repeated herein.

In an embodiment, when the antenna port state of the current uplink transmission of the terminal device and the antenna port state of the preceding uplink transmission of the terminal device do not meet the preset condition, it determines that the band switching of the uplink transmitter of the terminal device does not occur, and at this time, there is no need to set a switching gap for the uplink transmitter to switch the uplink transmission band, and the uplink transmission of the terminal is performed normally without uplink transmitter switching.

In the uplink transmitter switching method provided by the embodiment of the present disclosure, a correspondence between the state of the uplink transmitter of the terminal device on more than two bands and the possible case of the antenna port of the uplink transmission is established, and thus based on the correspondence, whether the antenna port state of the current uplink transmission and the antenna port state of the preceding uplink transmission meet the preset condition is determined. When the preset condition is met, it determines that the uplink transmitter of the terminal device switches the uplink band, and there is the switching gap during which the uplink transmission cannot be performed due to the transmitter switching, so that the uplink transmitter of the terminal device may dynamically switch among more than two uplink bands, which ensures reception performance of the uplink transmission, and improves NR uplink rate, spectrum utilization and uplink capacity.

In an embodiment, before determining the antenna port state of the current uplink transmission of the terminal device and the antenna port state of the preceding uplink transmission of the terminal device in S202, the method further includes:
determining an initial state of the antenna port of the uplink transmission of the terminal device, the initial state being a state of supporting a two-port uplink transmission on at least one carrier in a preset band, and the preset band being a band of the more than two bands.

The initial state of the antenna port of the uplink transmission is used to determine whether to set the switching gap for an initial uplink transmission after the uplink transmitter switching option is configured as the switched uplink. In the case where the uplink transmitter switching option is configured as the switched uplink, the initial state is used as part of the preset condition for the antenna port state of the preceding uplink transmission of the terminal device to determine whether the current state of the terminal device and the antenna port state of the preceding uplink transmission meet the preset condition, so as to determine whether there is the switching gap during which the uplink transmission cannot be performed due to the transmitter switching, so that the uplink transmitter of the terminal device may dynamically switch among more than two bands to ensure the reception performance of the uplink transmission.

It is to be noted that the preset band may be determined according to the actual situation, which is not specifically limited in the present disclosure.

In an embodiment, the preset band is preset in a protocol or configured to the terminal device through the network device, so that the network device determines whether it needs to set the switching gap for the uplink transmitter to switch the band for the initial uplink transmission of the terminal device.

The uplink transmitter switching option is dual uplink, which is used to indicate that the terminal device with two uplink transmitters supports simultaneous uplink transmissions on carriers of different bands. The multi-carrier uplink transmission scene for which the dual uplink may be used includes a multi-carrier uplink transmission of inter-band CA.

When the uplink transmitter switching option configuration information configures the uplink transmitter switching option as the dual uplink, the terminal device with two uplink transmitters supports simultaneous uplink transmissions on carriers of different bands. Table 3 illustrates possible cases of states of the uplink transmitter of the terminal device on three bands and an antenna port state of the uplink transmission under the dual uplink scene. The number of uplink transmitters on the bands and the number of the antenna ports on the uplink band are used to characterize the states of the uplink transmitter of the terminal device on the three bands and the antenna port state of the uplink transmission.

**Table 3**

| Case | Number of uplink transmitters of band A + Number of uplink transmitters of band B + Number of uplink transmitters of band C (xT indicates x uplink transmitters) | Number of uplink transmission antenna ports of band A + Number of uplink transmission antenna ports of band B + Number of uplink transmission antenna ports of band C (xP indicates there being at most x antenna ports on each carrier of corresponding band) |
|---|---|---|
| Case 1 | 2T+0T+0T | 2P+0P+0P or 1P+0P+0P |
| Case 2 | 0T+2T+0T | 0P+2P+0P or 0P+1P+0P |
| Case 3 | 0T+0T+2T | 0P+0P+2P or 0P+0P+1P |
| Case 4 | 1T+1T+0T | 1P+0P+0P or 1P+1P+0P or 0P+1P+0P |
| Case 5 | 1T+0T+1T | 1P+0P+0P or 1P+0P+1P or 0P+0P+1P |
| Case 6 | 0T+1T+1T | 0P+1P+0P or 0P+1P+1P or 0P+0P+1P |

As shown in Table 3, under the dual uplink scene, the states of two uplink transmitters on three bands include six cases. In three cases thereof, the number of uplink transmitters on one band is two, the numbers of uplink transmitters on the other bands are zero, and accordingly, the number of antenna ports for the uplink transmission on one band is classified into two cases, i.e., the number of antenna ports for the uplink transmission on that band is two or one, which corresponds to the cases 1 to 3 in Table 3. In the other three cases, the number of uplink transmitters on two bands is 1T, the number of uplink transmitters on the remaining one band is zero, and accordingly, the number of antenna ports for the uplink transmission on at least on band of the above two bands is one, and the number of antenna ports for the uplink transmission on the remaining one band is zero.

Table 4 illustrates possible cases of states of the uplink transmitter of the terminal device on four bands and an antenna port of the uplink transmission under the dual uplink scene.

**Table 4**

| Case | Number of uplink transmitters of band A + Number of uplink transmitters of band B + Number of uplink transmitters of band C+ Number of uplink transmitters of band D/xT indicates x uplink transmitters | Number of uplink transmission antenna ports of band A + Number of uplink transmission antenna ports of band B + Number of uplink transmission antenna ports of band C+ Number of uplink transmission antenna ports of band D/xP indicates there being at most x antenna ports on each carrier of corresponding band |
|---|---|---|
| Case 1 | 2T+0T+0T+0T | 2P+0P+0P+0P or 1P+0P+0P+0P |
| Case 2 | 0T+2T+0T+0T | 0P+2P+0P+0P or 0P+1P+0P+0P |
| Case 3 | 0T+0T+2T+0T | 0P+0P+2P+0P or 0P+0P+1P+0P |
| Case 4 | 0T+0T+0T+2T | 0P+0P+0P+2P or 0P+0P+0P+1P |
| Case 5 | 1T+1T+0T+0T | 1P+0P+0P+0P or 1P+1P+0P+0P or 0P+1P+0P+0P |
| Case 6 | 1T+0T+1T+0T | 1P+0P+0P+0P or 1P+0P+1P+0P or 0P+0P+1P+0P |
| Case 7 | 1T+0T+0T+1T | 1P+0P+0P+0P or 1P+0P+0P+1P or 0P+0P+0P+1P |
| Case 8 | 0T+1T+1T+0T | 0P+1P+0P+0P or 0P+1P+1P+0P or 0P+0P+1P+0P |
| Case 9 | 0T+1T+0T+1T | 0P+1P+0P+0P or 0P+1P+0P+1P or 0P+0P+0P+1P |
| Case 10 | 0T+0T+1T+1T | 0P+0P+1P+0P or 0P+0P+1P+1P or 0P+0P+0P+1P |

As shown in Table 4, under the dual uplink scene, the states of two uplink transmitters on four bands include ten cases. In four cases thereof, the number of uplink transmitters on one band is two, the numbers of uplink transmitters on the other bands are zero, and accordingly, the number of antenna ports for the uplink transmission on the band is classified into two cases, i.e., the number of antenna ports for the uplink transmission on the band is two or one, as shown in the cases 1 to 4 in Table 4. In the other six cases, the numbers of uplink transmitters on two bands respectively are 1, the numbers of uplink transmitters on the remaining two bands are zero, and accordingly, the number of antenna ports for the uplink transmission on at least on band of the above two bands is one, and the numbers of antenna ports for the uplink transmission on the remaining two bands are zero, as shown in cases 5 to 10 in Table 4.

In Table 3 or Table 4, if the uplink transmitter states of the current uplink transmission and the preceding uplink transmission belong to different cases, the terminal device needs to perform uplink transmitter switching, a switching gap for the uplink transmitter of the terminal device to switch the uplink transmission band is required, and the terminal may not perform the uplink transmission during the switching gap.

As for a first scene of band switching of the uplink transmitter under the dual uplink scene, if the current state of the terminal device is that the number of uplink transmitters on a first band of more than two bands is 2T, and the number of uplink transmitters on the remaining bands thereof is 0T, for example, in the case 1 in Table 3 or Table 4; and the state of the terminal device in a next uplink transmission is that the two-port uplink transmission is on at least one carrier on a second band of the remaining bands, for example, in the case 2 in Table 3 or Table 4, the uplink transmitter of the terminal device performs band switching, and the uplink transmitter state of the terminal device after the switching is that the number of uplink transmitters on the second band is 2T and the number of uplink transmitters on the other bands is 0T.

Since the network device (e.g., a base station) determines the uplink transmitter state of the terminal device using the antenna port state of the uplink transmission, the switching gap during which the terminal device may not perform the uplink transmission due to the uplink transmitter switching may be determined as follows: when the terminal device performs the two-port uplink transmission on at least one carrier on one band, and the preceding uplink transmission of the terminal device is the one-port or two-port uplink transmission on at least one carrier on another band, the terminal device does not perform an uplink transmission on a carrier of any band during the switching gap.

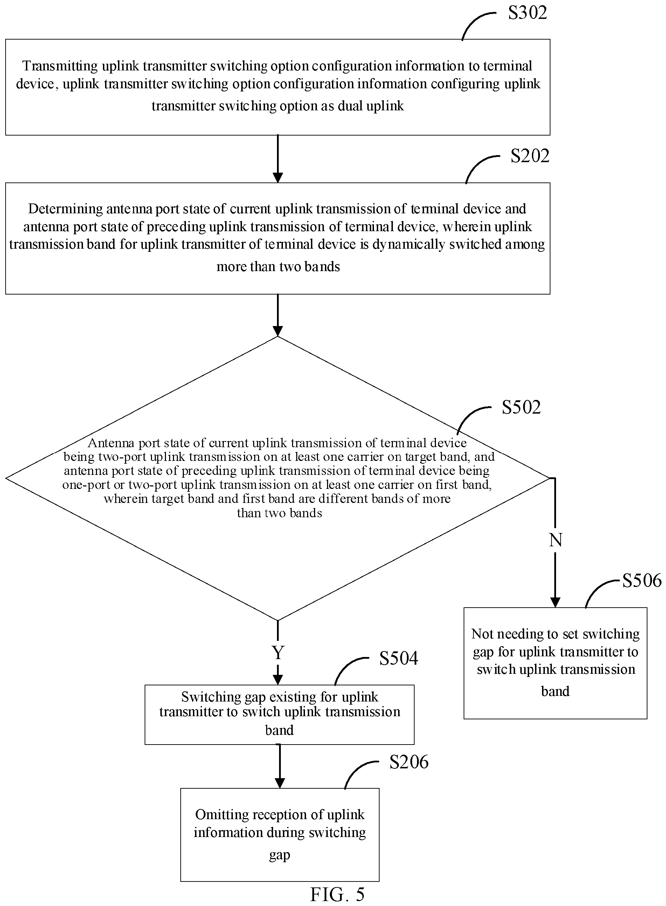

For this scene, FIG. 5 illustrates a flowchart of an uplink transmitter switching method under dual uplink configuration provided by an embodiment of the present disclosure. The embodiment further refines S204 on the basis of FIG. 3. As shown in FIG. 5, the method includes S202, S206, S302, and S502~S506, and specifically includes:
S302, transmitting uplink transmitter switching option configuration information to the terminal device, the uplink transmitter switching option configuration information configuring an uplink transmitter switching option as the dual uplink;
S502, presetting the condition as that: the antenna port state of the current uplink transmission of the terminal device is a two-port uplink transmission on at least one carrier on a target band, and
the antenna port state of the preceding uplink transmission of the terminal device is a one-port or two-port uplink transmission on at least one carrier on a first band,
wherein the target band and the first band are different bands of more than two bands;
S504, if the preset condition is met, a switching gap existing for the uplink transmitter to switch the uplink transmission band;
S506, if the preset condition is not met, not needing to set the switching gap for the uplink transmitter to switch the uplink transmission band.

It is to be noted that S202, S206 are the same as the above embodiments, which will not be repeated herein.

As for a second scene of band switching of the uplink transmitter under the dual uplink scene, if the current state of the terminal device is that the number of uplink transmitters on a first band of more than two bands is 2T, and the number of uplink transmitters on the remaining bands thereof is 0T, for example, in the case 1 in Table 3 or Table 4; and the state of the terminal device in a next uplink transmission is that the one-port uplink transmission is performed on at least one carrier on each of two bands of the more than two bands, for example, there is 1P respectively on different bands in the cases 4 to 6 in Table 3 or the cases 5 to 10 in Table 4, the uplink transmitter of the terminal device performs band switching, and the uplink transmitter state of the terminal device after the switching is that the numbers of uplink transmitters on the above two bands are respectively 1T and the numbers of uplink transmitters on the other bands are 0T.

Since the network device (e.g., a base station) determines the uplink transmitter state of the terminal device using the antenna port state of the uplink transmission, the switching gap during which the terminal device may not perform the uplink transmission due to the uplink transmitter switching may be determined as follows: when the terminal device will perform the one-port uplink transmission on at least one carrier on a first band and will perform the one-port uplink transmission on at least one carrier on a second band, and the preceding uplink transmission of the terminal device is the one-port uplink transmission on at least one carrier on a certain band and the state of the terminal device is of supporting the two-port uplink transmission in the band, or the preceding uplink transmission of the terminal device is the two-port uplink transmission on at least one carrier on a certain band, then the terminal device does not perform the uplink transmission on any carrier during the switching gap.

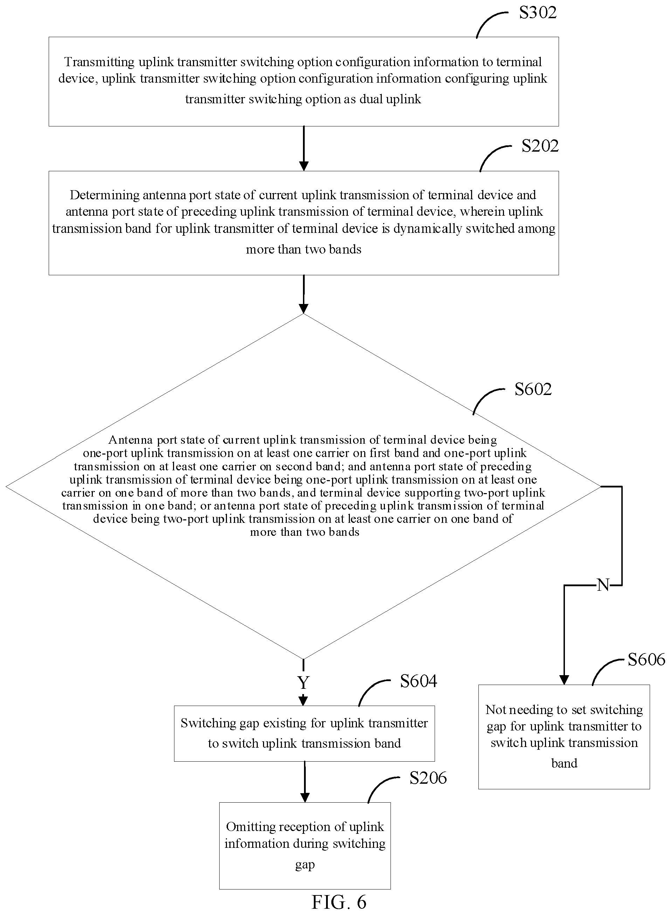

For the second scene, FIG. 6 illustrates a flowchart of an uplink transmitter switching method under dual uplink configuration provided by yet another embodiment of the present disclosure. The embodiment further refines S204 into S602~S606 on the basis of FIG. 3. As shown in FIG. 6, the method includes S202, S206, S302, and S602~S606, and specifically includes:
S302, transmitting uplink transmitter switching option configuration information to the terminal device, the uplink transmitter switching option configuration information configuring an uplink transmitter switching option as the dual uplink;
S602, presetting the condition as that: the antenna port state of the current uplink transmission of the terminal device is a one-port uplink transmission on at least one carrier on a first band and a one-port uplink transmission on at least one carrier on a second band, wherein the first band and the second band are different bands of the more than two bands; and
the antenna port state of the preceding uplink transmission of the terminal device is a one-port uplink transmission on at least one carrier on one band of the more than two bands, and the terminal device supports a two-port uplink transmission in the one band; or
the antenna port state of the preceding uplink transmission of the terminal device is a two-port uplink transmission on at least one carrier on one band of the more than two bands;
S604, if the preset condition is met, a switching gap existing for the uplink transmitter to switch the uplink transmission band;
S506, if the preset condition is not met, not needing to set the switching gap for the uplink transmitter to switch the uplink transmission band.

It is to be noted that S202, S206 are the same as the above embodiments, which will not be repeated herein.

In an embodiment, the one band of the more than two bands for the preceding uplink transmission of the terminal device may be the same as or different from the first band or the second band, which is not specifically limited in the present disclosure.

As for a third scene of band switching of the uplink transmitter under the dual uplink scene, if the current state of the terminal device is that the number of uplink transmitters on a first band of the more than two bands is 2T, and the number of uplink transmitters on the remaining bands thereof is 0T, for example, in the case 1 in Table 3 or Table 4; and the state of the terminal device in a next uplink transmission is that a one-port uplink transmission is performed on at least one carrier on a second band of the remaining bands of the more than two bands, and there is no uplink transmission on the other bands, then the uplink transmitter of the terminal device performs the band switching. The uplink transmitter of the terminal device after the switching includes two states. In one state, the number of uplink transmitters on the first band is 1T, the number of uplink transmitters on the second band is 1T, and the number of uplink transmitter on the other bands is 0T, for example, the case 4 in Table 3 and the case 5 in Table 4. In the other state, the number of uplink transmitters on the second band is 2T, and the number of uplink transmitter on the other bands is 0T, for example, the case 2 in Table 3 and the case 2 in Table 4.

Since the network device (e.g., a base station) determines the uplink transmitter state of the terminal device using the antenna port state of the uplink transmission, the switching gap during which the terminal device may not perform the uplink transmission due to the uplink transmitter switching may be determined as follows: when the terminal device currently performs the one-port uplink transmission on at least one carrier on a certain band, and the preceding uplink transmission of the terminal device is the one-port uplink transmission on at least one carrier on another band and the state of the terminal device is of supporting the two-port uplink transmission in the band, or the preceding uplink transmission of the terminal device is the two-port uplink transmission on at least one carrier on another band, then the terminal device does not perform the uplink transmission on any carrier during the switching gap.

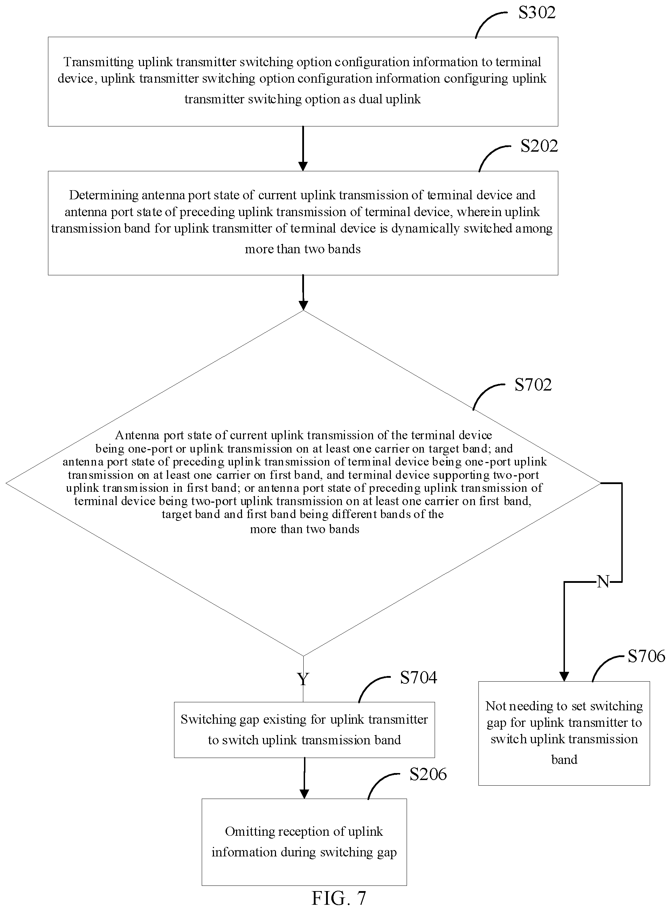

For the third scene, FIG. 7 illustrates a flowchart of an uplink transmitter switching method under dual uplink configuration provided by another embodiment of the present disclosure. The embodiment further refines S204 into S702~S706 on the basis of FIG. 3. As shown in FIG. 7, the method includes S202, S206, S302, and S702~S706, and specifically includes:
S302, transmitting uplink transmitter switching option configuration information to the terminal device, the uplink transmitter switching option configuration information configuring an uplink transmitter switching option as the dual uplink;
S702, presetting the condition as that: the antenna port state of the current uplink transmission of the terminal device is a one-port uplink transmission on at least one carrier on a target band; and
the antenna port state of the preceding uplink transmission of the terminal device is a one-port uplink transmission on at least one carrier on a first band, and the terminal device supports a two-port uplink transmission in the first band; or
the antenna port state of the preceding uplink transmission of the terminal device is a two-port uplink transmission on at least one carrier on the first band,
wherein the target band and the first band are different bands of the more than two bands;
S704, if the preset condition is met, a switching gap existing for the uplink transmitter to switch the uplink transmission band;
S706, if the preset condition is not met, not needing to set the switching gap for the uplink transmitter to switch the uplink transmission band.

It is to be noted that S202, S206 are the same as the above embodiments, which will not be repeated herein.

As for a fourth scene of band switching of the uplink transmitter under the dual uplink scene, if the current state of the terminal device is that the numbers of uplink transmitters on a first band and a second band of the more than two bands are 1T respectively, and the number of uplink transmitters on the remaining bands thereof is 0T, for example, in the case 4 in Table 3 and the case 5 in Table 4; and the state of the terminal device in a next uplink transmission is that a two-port uplink transmission is performed on at least one carrier on a certain band, for example, in the cases 1 to 3 in Table 3 and the cases 1 to 4 in Table 4, then the switching of the uplink transmitter of the terminal device occurs. The state of the uplink transmitter of the terminal device after the switching is that the number of uplink transmitters on the band is 2T, and the number of uplink transmitters on the remaining bands is 0T.

Since the network device (e.g., a base station) determines the uplink transmitter state of the terminal device using the antenna port state of the uplink transmission, the switching gap during which the terminal device may not perform the uplink transmission due to the uplink transmitter switching may be determined as follows. When the terminal device will perform a two-port uplink transmission on at least one carrier on a certain band, and the preceding uplink transmission of the terminal device is a one-port uplink transmission performed on at least one carrier on another band, then the terminal device does not perform the uplink transmission on any carrier during the switching gap. When the terminal device will perform a two-port uplink transmission on at least one carrier on a certain band, and the preceding uplink transmission of the terminal device is a one-port uplink transmission performed on at least one carrier on each band of two bands, then the terminal device does not perform the uplink transmission on any carrier during the switching gap. Alternatively, when the terminal device will perform a two-port uplink transmission on at least one carrier on a certain band, the preceding uplink transmission of the terminal device is a one-port uplink transmission performed on at least one carrier on the same band, and the state of the terminal device is of not supporting a two-port uplink transmission in the same band, then the terminal device does not perform the uplink transmission on any carrier during the switching gap. Alternatively, the switching gap during which the terminal device may not perform the uplink transmission due to the uplink transmitter switching may be determined as follows: when the terminal device will perform a two-port uplink transmission on at least one carrier on a certain band, the preceding uplink transmission of the terminal device is a one-port uplink transmission performed on at least one carrier on at least one band of two bands, and the terminal device supports a one-port uplink transmission in each band of the two bands, then the terminal device does not perform the uplink transmission on any carrier during the switching gap.

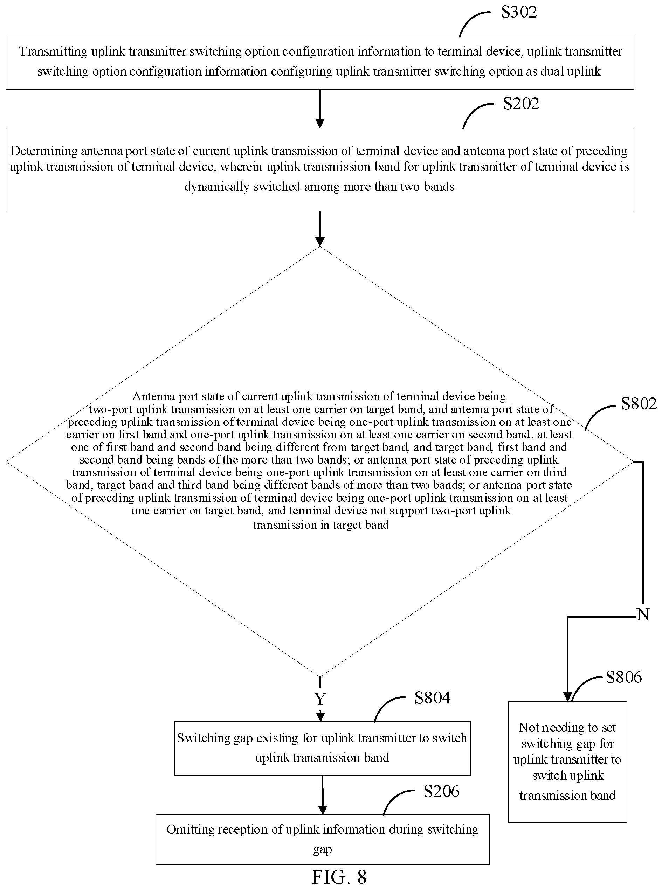

For the fourth scene, FIG. 8 illustrates a flowchart of an uplink transmitter switching method under dual uplink configuration provided by another embodiment of the present disclosure. The embodiment further refines S204 into S802~S806 on the basis of FIG. 3. As shown in FIG. 8, the method includes S202, S206, S302, and S802~S806, and specifically includes:
S302, transmitting uplink transmitter switching option configuration information to the terminal device, the uplink transmitter switching option configuration information configuring an uplink transmitter switching option as the dual uplink;
S802, presetting the condition as that: the antenna port state of the current uplink transmission of the terminal device is a two-port uplink transmission on at least one carrier on a target band, and
the antenna port state of the preceding uplink transmission of the terminal device is a one-port uplink transmission on at least one carrier on a first band and a one-port uplink transmission on at least one carrier on a second band, wherein at least one of the first band and the second band is different from the target band, and the target band, the first band and the second band are bands of the more than two bands; or
the antenna port state of the preceding uplink transmission of the terminal device is a one-port uplink transmission on at least one carrier on a third band, wherein the target band and the third band are different bands of the more than two bands; or
the antenna port state of the preceding uplink transmission of the terminal device is a one-port uplink transmission on the at least one carrier on the target band, and the terminal device does not support a two-port uplink transmission in the target band;
S804, if the preset condition is met, a switching gap existing for the uplink transmitter to switch the uplink transmission band;
S806, if the preset condition is not met, not needing to set the switching gap for the uplink transmitter to switch the uplink transmission band.

It is to be noted that S202, S206 are the same as the above embodiments, which will not be repeated herein.

As for a fifth scene of band switching of the uplink transmitter under the dual uplink scene, if the current state of the terminal device is that the numbers of uplink transmitters on a first band and a second band of the more than two bands are 1T respectively, and the number of uplink transmitters on the remaining bands thereof is 0T, for example, in the case 4 in Table 3 and the case 5 in Table 4; and the state of the terminal device in a next uplink transmission is that a one-port uplink transmission is performed on at least one carrier on a third band of the more than two bands, and there is no uplink transmission on the other bands, then the uplink transmitter of the terminal device performs the band switching. The uplink transmitter of the terminal device after the switching includes three states. In a first state, the numbers of uplink transmitters on the second band and the third band are 1T respectively, and the number of uplink transmitters on the other bands is 0T, for example, the case 6 in Table 3 and the case 8 in Table 4. In a second state, the numbers of uplink transmitters on the first band and third band are 1T respectively, and the number of uplink transmitters on the other bands is 0T, for example, the case 5 in Table 3 and the case 6 in Table 4. In a third state, the number of uplink transmitters on the third band is 2T, and the number of uplink transmitters on the other bands is 0T, for example, the case 3 in Table 3 and the case 3 in Table 4.

Since the network device (e.g., a base station) determines the uplink transmitter state of the terminal device using the antenna port state of the uplink transmission, the switching gap during which the terminal device may not perform the uplink transmission due to the uplink transmitter switching may be determined as follows: when the preceding uplink transmission of the terminal device is a one-port uplink transmission performed on at least one carrier on at least one of the first band and the second band, the state of the terminal device is of supporting a one-port uplink transmission in both of the first band and the second band, the terminal device currently performs an unlink transmission of one port on at least one carrier of the third band, and there is no uplink transmission on the first band and the second band, then the terminal device does not perform the uplink transmission on any carrier during the switching gap.

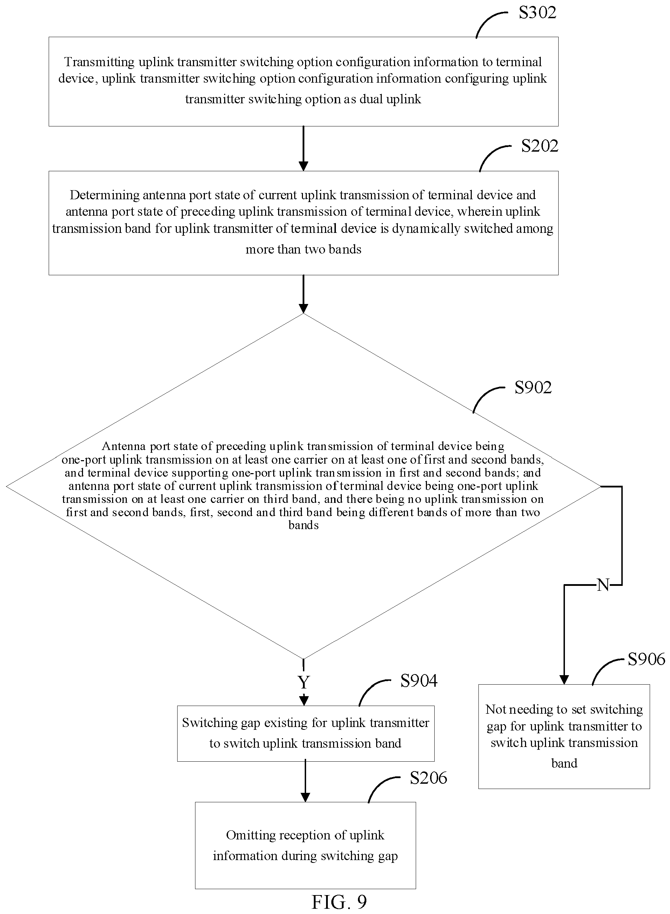

For the fifth scene, FIG. 9 illustrates a flowchart of an uplink transmitter switching method under dual uplink configuration provided by another embodiment of the present disclosure. The embodiment further refines S204 into S902~S906 on the basis of FIG. 3. As shown in FIG. 9, the method includes S202, S206, S302, and S902~S906, and specifically includes:
S302, the uplink transmitter switching option configuration information configuring an uplink transmitter switching option as the dual uplink;
S902, presetting the condition as that: the antenna port state of the preceding uplink transmission of the terminal device is a one-port uplink transmission on at least one carrier on at least one of a first band and a second band, and the terminal device supports a one-port uplink transmission in the first band and the second band; and
the antenna port state of the current uplink transmission of the terminal device is a one-port uplink transmission on at least one carrier on a third band, and there is no uplink transmission on the first band and the second band,
wherein the first band, the second band and the third band are different bands of the more than two bands;
S904, if the preset condition is met, a switching gap existing for the uplink transmitter to switch the uplink transmission band;
S906, if the preset condition is not met, not needing to set the switching gap for the uplink transmitter to switch the uplink transmission band.

It is to be noted that S202, S206 are the same as the above embodiments, which will not be repeated herein.

As for a six scene of band switching of the uplink transmitter under the dual uplink scene, if the current state of the terminal device is that the numbers of uplink transmitters on a first band and a second band of the more than two bands are 1T respectively, and the number of uplink transmitters on the remaining bands thereof is 0T; and the state of the terminal device in a next uplink transmission is that a one-port uplink transmission is performed on at least one carrier on each of two bands of the more than two bands, and at least one of the two bands is a different band from the first band and the second band, then the uplink transmitter of the terminal device performs the band switching, and the uplink transmitter state of the terminal device after the switching is that the numbers of uplink transmitters on the two bands are 1T respectively.

Since the network device (e.g., a base station) determines the uplink transmitter state of the terminal device using the antenna port state of the uplink transmission, the switching gap during which the terminal device may not perform the uplink transmission due to the uplink transmitter switching may be determined as follows: when the preceding uplink transmission of the terminal device is a one-port uplink transmission performed on at least one carrier on at least one of the first band and the second band, the state of the terminal device is of supporting a one-port uplink transmission in both of the first band and the second band, the current state of the terminal device is that a one-port uplink transmission is performed on at least one carrier on each of two bands, and at least one of the two bands is a different band from the first band and the second band, then the terminal device does not perform the uplink transmission on any carrier during the switching gap.

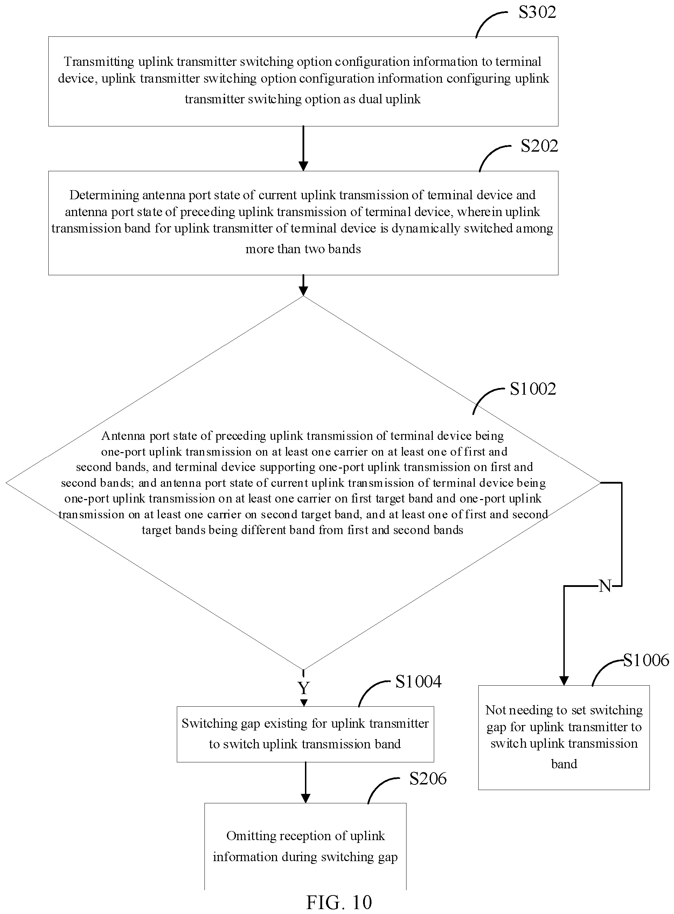

For the six scene, FIG. 10 illustrates a flowchart of an uplink transmitter switching method under dual uplink configuration provided by another embodiment of the present disclosure. The embodiment further refines S204 into S1002~S1006 on the basis of FIG. 3. As shown in FIG. 10, the method includes S202, S206, S302, and S1002~S1006, and specifically includes:
S302, the uplink transmitter switching option configuration information configuring an uplink transmitter switching option as the dual uplink;
S1002, presetting the condition as that: the antenna port state of the preceding uplink transmission of the terminal device is a one-port uplink transmission on at least one carrier on at least one of a first band and a second band, and the terminal device supports a one-port uplink transmission in the first band and the second band; and
the antenna port state of the current uplink transmission of the terminal device is a one-port uplink transmission on at least one carrier on a first target band and a one-port uplink transmission on at least one carrier on a second target band, and at least one of the first target band and the second target band is a different band from the first band and the second band,
wherein the first band, the second band, the first target band, and the second target band are bands of the more than two bands;
S1004, if the preset condition is met, a switching gap existing for the uplink transmitter to switch the uplink transmission band;
S1006, if the preset condition is not met, not needing to set the switching gap for the uplink transmitter to switch the uplink transmission band.

It is to be noted that S202, S206 are the same as the above embodiments, which will not be repeated herein.

In an embodiment of the present disclosure, in FIGS. 5 to 10, all or some of the preset conditions described in S502, S602, S702, S802, S902, S1002 form a preset condition set. If any one of the preset conditions in the preset condition set is met, a switching gap exists for the uplink transmitter to switch the uplink transmission band; and if all of the preset conditions in the set preset condition set are not met, there is no need to set the switching gap for the uplink transmitter to switch the uplink transmission band.

In an embodiment of the present disclosure, before determining the antenna port state of the current uplink transmission of the terminal device and the antenna port state of the preceding uplink transmission of the terminal device in step S202, the method further includes:
determining an initial state of an antenna port of the uplink transmission of the terminal device,
wherein the initial state is a state of supporting a two-port uplink transmission on at least one carrier in one preset band, and the one preset band is a band of the more than two bands; or
the initial state is a state of respectively supporting a one-port uplink transmission in two preset bands, and the two preset bands are bands of the more than two bands

In an embodiment, the initial state of the antenna port of the uplink transmission is used to determine whether to set the switching gap for an initial uplink transmission after the uplink transmitter switching option is configured as the dual uplink. In the case where the uplink transmitter switching option is configured as the dual uplink, the initial state is used as part of the preset condition for the antenna port state of the preceding uplink transmission of the terminal device to determine whether the current state of the terminal device and the antenna port state of the preceding uplink transmission meet the preset condition, so as to determine whether there is the switching gap during which the uplink transmission cannot be performed due to the transmitter switching, so that the uplink transmitter of the terminal device may dynamically switch among more than two bands to ensure the reception performance of the uplink transmission. It is to be noted that the preset band may be determined according to the actual situation, which is not specifically limited in the present disclosure.

In an embodiment, the preset band is preset in a protocol or configured to the terminal device through the network device, so that the network device determines whether it needs to set the switching gap for the uplink transmitter to switch the band for the initial uplink transmission of the terminal device.

In the uplink transmitter switching method provided by the embodiment of the present disclosure, under the dual uplink scene, a correspondence between the state of the uplink transmitter of the terminal device on more than two bands and the possible case of the antenna port of the uplink transmission is established, and based on the correspondence, whether the antenna port state of the current uplink transmission and the antenna port state of the preceding uplink transmission meet the preset condition is determined. When the preset condition is met, it determines that the uplink transmitter of the terminal device switches the uplink band, and there is the switching gap during which the uplink transmission cannot be performed due to the transmitter switching, so that the uplink transmitter of the terminal device may dynamically switch among more than two uplink bands, which ensures reception performance of the uplink transmission, and improves NR uplink rate, spectrum utilization and uplink capacity.

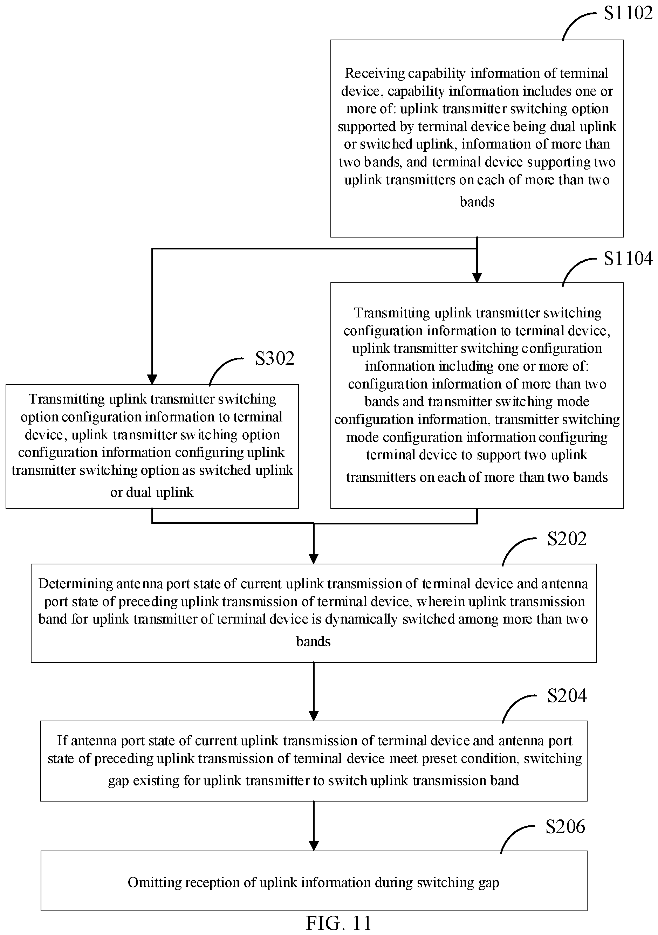

FIG. 11 illustrates a flowchart of an uplink transmitter switching method provided by another embodiment of the present disclosure. This embodiment adds S1102 and S1104 before S202 on the basis of FIG. 3, and further, the above steps may be added before S202 on the basis of FIG. 2.

In an embodiment, before determining the antenna port state of the current uplink transmission of the terminal device and the antenna port state of the preceding uplink transmission of the terminal device in S202, the method further includes:
S1102, receiving capability information of the terminal device, wherein the capability information includes one or more of: an uplink transmitter switching option supported by the terminal device being dual uplink or switched uplink, information of the more than two bands, and the terminal device supporting two uplink transmitters in each of the more than two bands; and
S1104, transmitting uplink transmitter switching configuration information to the terminal device, the uplink transmitter switching configuration information comprising one or more of: configuration information of the more than two bands and transmitter switching mode configuration information, wherein the transmitter switching mode configuration information configures the terminal device to support two uplink transmitters in each of the more than two bands.

It is to be noted that before the uplink transmitter of the terminal device performs the band switching, the terminal device transmits the capability information to the network device such as a base station, to report that the terminal device has the band switching capability.

When the network device receives the reported capability information of the terminal device, it configures the terminal device according to the capability information, thereby completing dynamic switching of the uplink transmitter of the terminal device among the more than two bands.

Based on the same inventive concept, an embodiment of the present disclosure also provides an uplink transmitter switching method, as described in the following embodiment. The method is applied to a terminal device, and since the principle of problem solving of the method embodiment is similar to that of the above method embodiment, the implementation of the method embodiment may be referred to the implementation of the above method embodiment applied to the network device, which is not repeated herein.

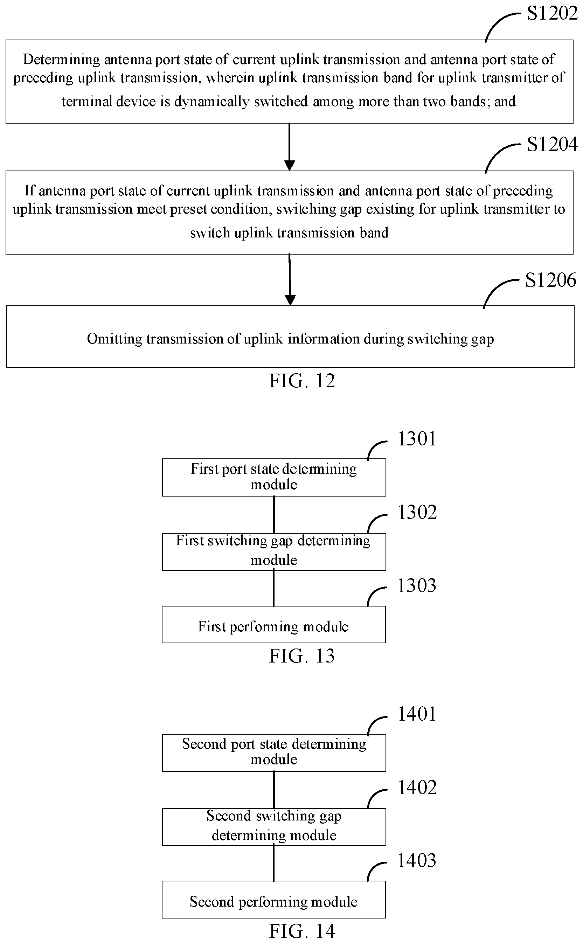

FIG. 12 illustrates a flowchart of an uplink transmitter switching method provided by yet another embodiment of the present disclosure. As shown in FIG. 12, the uplink transmitter switching method of the present embodiment is applied to the terminal device side, and includes:
S1202, determining an antenna port state of a current uplink transmission and an antenna port state of a preceding uplink transmission, wherein an uplink transmission band for an uplink transmitter of the terminal device is dynamically switched among more than two bands; and
S1204, if the antenna port state of the current uplink transmission and the antenna port state of the preceding uplink transmission meet a preset condition, a switching gap existing for the uplink transmitter to switch the uplink transmission band; and
S 1206, omitting transmission of uplink information during the switching gap.

Based on the same inventive concept, embodiments of the present disclosure also provide a network device and a terminal device as described in the following embodiments. Since the principle of problem solving of the device embodiment is similar to that of the method embodiment described above, the implementation of the device embodiment may refer to the implementation of the method embodiment described above, which will not be repeated herein.

FIG. 13 illustrates a schematic diagram of a network device provided by an embodiment of the present disclosure. As shown in FIG. 13, the network device of the present embodiment includes:
a first port state determining module 1301, configured to determine an antenna port state of a current uplink transmission of a terminal device and an antenna port state of a preceding uplink transmission of the terminal device, wherein an uplink transmission band for an uplink transmitter of the terminal device is dynamically switched among more than two bands;
a first switching gap determining module 1302, configured to if the antenna port state of the current uplink transmission of the terminal device and the antenna port state of the preceding uplink transmission of the terminal device meet a preset condition, a switching gap exists for the uplink transmitter to switch the uplink transmission band; and
a first performing module 1303, configured to omit reception of uplink information during the switching gap.

In an embodiment, the network device further includes a configuring module, which is not shown in the drawings.

The configuring module is configured to, before determining the antenna port state of the current uplink transmission of the terminal device and the antenna port state of the preceding uplink transmission of the terminal device: transmit uplink transmitter switching option configuration information to the terminal device, the uplink transmitter switching option configuration information configuring an uplink transmitter switching option as switched uplink or dual uplink.

In an embodiment, the first switching gap determining module 1302 is configured so that the uplink transmitter switching option configuration information configures the uplink transmitter switching option as the switched uplink, and the preset condition is that:
the antenna port state of the current uplink transmission of the terminal device is a one-port or two-port uplink transmission on at least one carrier on a target band, and
the antenna port state of the preceding uplink transmission of the terminal device is a one-port or two-port uplink transmission on at least one carrier on a first band,
wherein the target band and the first band are different bands of the more than two bands.

It is to be noted that the network device further includes an initial state determining module not shown in the drawings, which is configured to before determining the antenna port state of the current uplink transmission of the terminal device and the antenna port state of the preceding uplink transmission of the terminal device, determine an initial state of an antenna port of the uplink transmission of the terminal device, wherein the initial state is a state of supporting a two-port uplink transmission on at least one carrier in a preset band, and the preset band is a band of the more than two bands.

In an embodiment, the preset band is pre-set in a protocol or configured to the terminal device through the network device.

In an embodiment, the first switching gap determining module 1302 is further configured so that the uplink transmitter switching option configuration information configures the uplink transmitter switching option as the dual uplink, and the preset condition is that:
the antenna port state of the current uplink transmission of the terminal device is a two-port uplink transmission on at least one carrier on a target band, and
the antenna port state of the preceding uplink transmission of the terminal device is a one-port or two-port uplink transmission on at least one carrier on a first band,
wherein the target band and the first band are different bands of the more than two bands.

In an embodiment, the first switching gap determining module 1302 is further configured so that the uplink transmitter switching option configuration information configures the uplink transmitter switching option as the dual uplink, and the preset condition is that:
the antenna port state of the current uplink transmission of the terminal device is a one-port uplink transmission on at least one carrier on a first band and a one-port uplink transmission on at least one carrier on a second band, wherein the first band and the second band are different bands of the more than two bands; and
the antenna port state of the preceding uplink transmission of the terminal device is a one-port uplink transmission on at least one carrier on one band of the more than two bands, and the terminal device supports a two-port uplink transmission in the one band; or
the antenna port state of the preceding uplink transmission of the terminal device is a two-port uplink transmission on the at least one carrier on the one band of the more than two bands.

In an embodiment, the first switching gap determining module 1302 is further configured so that the uplink transmitter switching option configuration information configures the uplink transmitter switching option as the dual uplink, and the preset condition is that:
the antenna port state of the current uplink transmission of the terminal device is a one-port uplink transmission on at least one carrier on a target band; and
the antenna port state of the preceding uplink transmission of the terminal device is a one-port uplink transmission on at least one carrier on a first band and the terminal device supports a two-port uplink transmission in the first band; or
the antenna port state of the preceding uplink transmission of the terminal device is a two-port uplink transmission on the at least one carrier on the first band,
wherein the target band and the first band are two bands of the more than two bands.

In an embodiment, the first switching gap determining module 1302 is further configured so that the uplink transmitter switching option configuration information configures the uplink transmitter switching option as the dual uplink, and the preset condition is that:
the antenna port state of the current uplink transmission of the terminal device is a two-port uplink transmission on at least one carrier on a target band, and
the antenna port state of the preceding uplink transmission of the terminal device is a one-port uplink transmission on at least one carrier on a first band and a one-port uplink transmission on at least one carrier on a second band, wherein at least one of the first band and the second band is different from the target band, and the target band, the first band and the second band are bands of the more than two bands; or
the antenna port state of the preceding uplink transmission of the terminal device is a one-port uplink transmission on the at least one carrier on the target band, and the terminal device does not support a two-port uplink transmission in the target band.

In an embodiment, the first switching gap determining module 1302 is further configured so that the uplink transmitter switching option configuration information configures the uplink transmitter switching option as the dual uplink, and the preset condition is that:
the antenna port state of the preceding uplink transmission of the terminal device is a one-port uplink transmission on at least one carrier on at least one of a first band and a second band, and the terminal device supports a one-port uplink transmission in the first band and the second band; and
the antenna port state of the current uplink transmission of the terminal device is a one-port uplink transmission on at least one carrier on a third band, and there is no uplink transmission on the first band and the second band,
wherein the first band, the second band and the third band are different bands of the more than two bands.

In an embodiment, the first switching gap determining module 1302 is further configured so that the uplink transmitter switching option configuration information configures the uplink transmitter switching option as the dual uplink, and the preset condition is that:
the antenna port state of the preceding uplink transmission of the terminal device is a one-port uplink transmission on at least one carrier on at least one of a first band and a second band, and the terminal device supports a one-port uplink transmission in the first band and the second band; and
the antenna port state of the current uplink transmission of the terminal device is a one-port uplink transmission on at least one carrier on a first target band and a one-port uplink transmission on at least one carrier on a second target band, and at least one of the first target band and the second target band is a different band from the first band and the second band,
wherein the first band, the second band, the first target band, and the second target band are bands of the more than two bands.

It is to be noted that the initial state determining module is further configured to, before determining the antenna port state of the current uplink transmission of the terminal device and the antenna port state of the preceding uplink transmission of the terminal device, determine an initial state of an antenna port of the uplink transmission of the terminal device,
wherein the initial state is a state of supporting a two-port uplink transmission on at least one carrier in one preset band, and the one preset band is a band of the more than two bands; or
the initial state is a state of respectively supporting a one-port uplink transmission in two preset bands, and the two preset bands are bands of the more than two bands.

In an embodiment, the one preset band or the two preset bands are pre-set in a protocol or configured to the terminal device through the network device.

In an embodiment of the present disclosure, the network device further includes a capability receiving module not shown in the drawings.

The capability receiving module is configured to, before determining the antenna port state of the current uplink transmission of the terminal device and the antenna port state of the preceding uplink transmission of the terminal device, receive capability information of the terminal device, wherein the capability information includes one or more of: an uplink transmitter switching option supported by the terminal device being dual uplink or switched uplink, information of the more than two bands, and the terminal device supporting two uplink transmitters in each of the more than two bands.

The configuring module is further configured to transmit uplink transmitter switching configuration information to the terminal device, the uplink transmitter switching configuration information includes one or more of: configuration information of the more than two bands and transmitter switching mode configuration information, wherein the transmitter switching mode configuration information configures the terminal device to support two uplink transmitters in each of the more than two bands.

In an embodiment, the first switching gap determining module 1302 is further configured to, if the antenna port state of the current uplink transmission of the terminal device and the antenna port state of the preceding uplink transmission of the terminal device do not meet the preset condition, not need to set the switching gap.

FIG. 14 illustrates a schematic diagram of a terminal device provided by an embodiment of the present disclosure. As shown in FIG. 14, the terminal device of the present embodiment includes:
a second port state determining module 1401, configured to determine an antenna port state of a current uplink transmission and an antenna port state of a preceding uplink transmission, wherein an uplink transmission band for an uplink transmitter of the terminal device is dynamically switched among more than two bands; and
a second switching gap determining module 1402, configured to, if the antenna port state of the current uplink transmission and the antenna port state of the preceding uplink transmission meet a preset condition, a switching gap exists for the uplink transmitter to switch the uplink transmission band; and
a second performing module 1403, configured to omit transmission of uplink information during the switching gap.

Based on the same inventive concept, an embodiment of the present disclosure provides a communication system, as described in the following embodiment. Since the principle of problem solving of the system embodiment is similar to that of the method embodiment described above, the implementation of the system embodiment may refer to the implementation of the method embodiment described above, which will not be repeated herein.

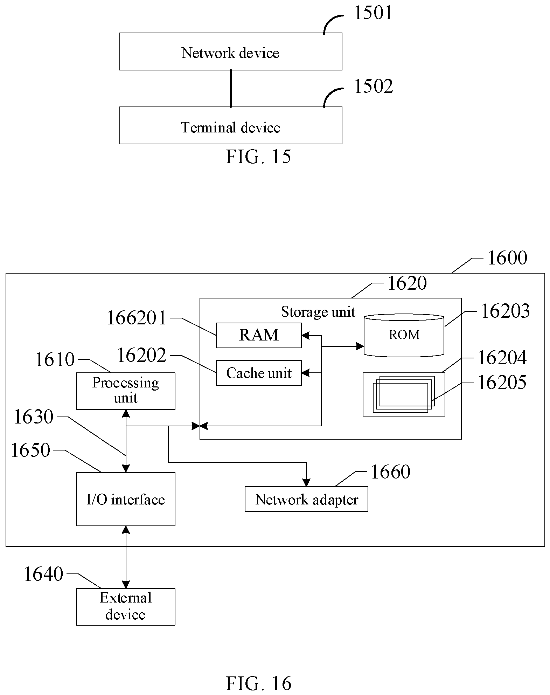

FIG. 15 illustrates a schematic diagram of a communication system provided by an embodiment of the present disclosure. As shown in FIG. 15, the communication system of the present embodiment includes a network device 1501 and a terminal device1502.

The network device 1501 is configured to: determine an antenna port state of a current uplink transmission of the terminal device 1502 and an antenna port state of a preceding uplink transmission of the terminal device 1502, wherein a band for an uplink transmitter of the terminal device 1502 is dynamically switched among more than two bands;
if the antenna port state of the current uplink transmission of the terminal device 1502 and the antenna port state of the preceding uplink transmission of the terminal device 1502 meet a preset condition, a switching gap exists for the uplink transmitter to switch the uplink transmission band; and
omit reception of uplink information during the switching gap.

The terminal device 1502 is configured to: determine the antenna port state of the current uplink transmission and the antenna port state of the preceding uplink transmission, wherein the band for the uplink transmitter of the terminal device 1502 is dynamically switched among the more than two bands; and
if the antenna port state of the current uplink transmission and the antenna port state of the preceding uplink transmission meet the preset condition, the switching gap exists for the uplink transmitter to switch the uplink transmission band; and
omit transmission of the uplink information during the switching gap.

A person skilled in the art may understand that various aspects of the present disclosure may be implemented as a system, method, or program product. Accordingly, various aspects of the present disclosure may be specifically realized in the form of a complete hardware implementation, a complete software implementation (including firmware, microcode, etc.), or a combination implementation of hardware and software, which may be collectively referred to herein as a "circuit", "module", or "system".

An electronic device 1600 according to such an embodiment of the present disclosure is described below with reference to FIG. 16. The electronic device 1600 shown in FIG. 16 is merely an example, and should not impose any limitations on the functionality and use scope of the embodiments of the present disclosure.

As shown in FIG. 16, the electronic device 1600 is represented in the form of a general computing device. The components of the electronic device 1600 may include, but are not limited to: at least one processing unit 1610 as described above, at least one storage unit 1620 as described above, and a bus 1630 connecting different system components including the storage unit 1620 and the processing unit 1610.

The memory unit stores program code, the program code may be executed by the processing unit 1610, causing the processing unit 1610 to perform the steps described in the above-described 'exemplary methods' in the specification according to various exemplary embodiments of the present disclosure. For example, the processing unit 1610 may perform the steps shown in FIG. 2 of: determining an antenna port state of a current uplink transmission of a terminal device and an antenna port state of a preceding uplink transmission of the terminal device, wherein an uplink transmission band for an uplink transmitter of the terminal device is dynamically switched among more than two bands; if the antenna port state of the current uplink transmission of the terminal device and the antenna port state of the preceding uplink transmission of the terminal device meet a preset condition, a switching gap existing for the uplink transmitter to switch the uplink transmission band; and omitting reception of uplink information during the switching gap.

For example, the processing unit 1610 may perform the steps shown in FIG .12 of: determining an antenna port state of a current uplink transmission and an antenna port state of a preceding uplink transmission, wherein an uplink transmission band for an uplink transmitter of the terminal device is dynamically switched among more than two bands; if the antenna port state of the current uplink transmission of the terminal device and the antenna port state of the preceding uplink transmission of the terminal device meet a preset condition, a switching gap existing for the uplink transmitter to switch the uplink transmission band; and omitting reception of uplink information during the switching gap.

The storage unit 1620 may include a readable medium in the form of a volatile storage unit, such as a random access memory unit (RAM) 16201 and/or a cache unit 16202, and may further include a read-only storage unit (ROM) 16203.

The storage unit 1620 may also include a program/utility tool 16204 having a set (at least one) of program modules 16205, and such program module 16205 may include, but not limited to: an operating system, one or more applications, other program modules, and program data, and each of these examples or some combination thereof may include an implementation of a network environment.

The bus 1630 may represent one or more of several types of bus structures, including a memory unit bus or memory unit controller, a peripheral bus, a graphics acceleration port, a processing unit, or a local area bus using any of a variety of bus structures.

The electronic device 1600 may also be in communication with one or more external devices 1600 (e.g., a keyboard, a pointing device, a Bluetooth device, etc.), and may also be in communication with one or more devices that enable a user to interact with the electronic device 1600, and/or may be in communication with any device (e.g., a router, a modem, etc.) that enables the electronic device1600 to communicate with one or more other computing devices. Such communication may be carried out via the input/output (I/O) interface 1650. And, the system may also communicate with one or more networks (e.g., a local area network (LAN), a wide area network (WAN), and/or a public network, such as the Internet) via the network adapter 1660. As shown, the network adapter 1660 communicates with other modules of the electronic device 1600 via the bus 1630. It is to be noted that although not shown in the figures, other hardware and/or software modules may be used in conjunction with the electronic device 1600, including, but not limited to: microcode, device drives, redundant processing units, external disk drive arrays, RAID systems, tape drives, and data backup storage systems.

By the foregoing description of embodiments, a person skilled in the art may easily conceive of that the example embodiment described herein may be implemented by software, or may be implemented by software in combination with the necessary hardware. Thus, a technical solution according to an embodiment of the present disclosure may be embodied in the form of a software product that may be stored in a non-volatile storage medium (which may be a CD-ROM, a USB flash drive, a removable hard drive, etc.) or on a network, and that includes a number of instructions for causing a computing device (which may be a personal computer, a server, a terminal device, or a network device, etc.) to perform the method according to an embodiment of the present disclosure.

In particular, according to an embodiment of the present disclosure, the process described above with reference to the flowchart may be implemented as a computer program product including a computer program, and the computer program may be executed by a processor to implement the above-described uplink transmitter switching method.

In an exemplary embodiment of the present disclosure, there is also provided a computer readable storage medium having stored thereon a program product which can implement the method described above in the present specification. In some possible embodiments, various aspect of the present disclosure may also be implemented in the form of a program product including program codes which, when running on a terminal device, causes the terminal device to perform the steps according to various exemplary embodiments of the present disclosure as described in the above-described `exemplary methods' in the specification.

A program product for implementing the above method according to an embodiment of the present disclosure is described, which may employ a portable compact disc read-only memory (CD-ROM) and include program codes, and may run on a terminal device, such as a personal computer. However, the program product of the present disclosure is not limited thereto, and in the present disclosure, the readable storage medium may be any tangible medium that contains or stores a program that may be used by or in combination with an instruction execution system, apparatus or device.

The program product may employ any combination of one or more readable media. The readable medium may be a readable signal medium or a readable storage medium. The readable storage medium may, for example, be, but is not limited to, a system, device, or apparatus that is electrical, magnetic, optical, electromagnetic, infrared, or semiconductor, or any combination thereof. More specific examples of readable storage media (a non-exhaustive list) include: an electrical connection having one or more wires, a portable disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

The computer-readable signal medium may include a data signal propagated in a baseband or as part of a carrier carrying readable program codes. Such propagated data signals may take a variety of forms, including, but not limited to, electromagnetic signals, optical signals, or any suitable combination thereof. The readable signal medium may also be any readable medium other than the readable storage medium that may transmit, propagate, or transmit a program for use by or in conjunction with an instruction-executing system, device, or apparatus.

The program code contained on the readable medium may be transmitted using any suitable medium, including, but not limited to: wireless, wire, optical cable, RF, or the like, or any suitable combination thereof.

The program code for performing the operations of the present disclosure may be written in one or more programming languages or combinations thereof, including object-oriented programming languages - such as Java, C++ - and conventional procedural programming languages - such as the 'C' language or similar programming languages. The program code may be executed entirely on a user computing device, executed partially on the user device, executed as a stand-alone software package, executed partially on the user computing device and partially on a remote computing device, or executed entirely on a remote computing device or server. In the case of the remote computing device, the remote computing may be connected to the user computing device via any kind of network, including a local area network (LAN) or a wide area network (WAN), or may be connected to an external computing device (e.g., by using the Internet of an Internet service provider).

It is to be noted that although a number of modules or units of the device for action execution are mentioned in the detailed description above, such division is not mandatory. Indeed, according to an embodiment of the present disclosure, the features and functions of two or more modules or units described above may be specified in a single module or unit. Conversely, the feature and function of one module or unit described above may be further divided to be specified by a plurality of modules or units.

Furthermore, although the various steps of the method in the present disclosure are described in the accompanying drawings in a particular order, it is not required or implied that the steps must be performed in that particular order or that all of the steps shown must be performed in order to achieve a desired result. Additionally or alternatively, certain steps may be omitted, a plurality of steps may be combined to be performed as a single step, and/or a single step may be broken down to be performed as a plurality of steps, and so on.

By the foregoing description of embodiments, a person skilled in the art may easily conceive of that the example embodiment described herein may be implemented by software, or may be implemented by software in combination with the necessary hardware. Thus, a technical solution according to an embodiment of the present disclosure may be embodied in the form of a software product that may be stored in a non-volatile storage medium (which may be a CD-ROM, a USB flash drive, a removable hard drive, etc.) or on a network, and that includes a number of instructions for causing a computing device (which may be a personal computer, a server, a terminal device, or a network device, etc.) to perform the method according to an embodiment of the present disclosure.

A person skilled in the art may easily conceive of other embodiments of the present disclosure upon consideration of the specification and practice of the invention. The present disclosure is intended to cover any variations, uses, or adaptations of the present disclosure that follow the general principles of the present disclosure and include the common knowledge or customary technical means in the art not disclosed by the present disclosure. The specification and embodiments are to be regarded as exemplary only, and the true scope and spirit of the present disclosure is indicated by the claims.

## Claims

1. An uplink transmitter switching method applied to a network device, comprising:
determining an antenna port state of a current uplink transmission of a terminal device and an antenna port state of a preceding uplink transmission of the terminal device, wherein an uplink transmission band for an uplink transmitter of the terminal device is dynamically switched among more than two bands;
if the antenna port state of the current uplink transmission of the terminal device and the antenna port state of the preceding uplink transmission of the terminal device meet a preset condition, a switching gap existing for the uplink transmitter to switch the uplink transmission band; and
omitting reception of uplink information during the switching gap.

2. The method according to claim 1, further comprising, before determining the antenna port state of the current uplink transmission of the terminal device and the antenna port state of the preceding uplink transmission of the terminal device:
transmitting uplink transmitter switching option configuration information to the terminal device, the uplink transmitter switching option configuration information configuring an uplink transmitter switching option as switched uplink or dual uplink.

3. The method according to claim 2, wherein the uplink transmitter switching option configuration information configures the uplink transmitter switching option as the dual uplink, and the preset condition is that:
the antenna port state of the current uplink transmission of the terminal device is a one-port uplink transmission on at least one carrier on a first band and a one-port uplink transmission on at least one carrier on a second band, wherein the first band and the second band are different bands of the more than two bands; and
the antenna port state of the preceding uplink transmission of the terminal device is a one-port uplink transmission on at least one carrier on one band of the more than two bands, and the terminal device supports a two-port uplink transmission in the one band; or
the antenna port state of the preceding uplink transmission of the terminal device is a two-port uplink transmission on the at least one carrier on the one band of the more than two bands.

4. The method according to claim 2, wherein the uplink transmitter switching option configuration information configures the uplink transmitter switching option as the dual uplink, and the preset condition is that:
the antenna port state of the current uplink transmission of the terminal device is a two-port uplink transmission on at least one carrier on a target band, and
the antenna port state of the preceding uplink transmission of the terminal device is a one-port uplink transmission on at least one carrier on a first band and a one-port uplink transmission on at least one carrier on a second band, wherein at least one of the first band and the second band is different from the target band, and the target band, the first band and the second band are bands of the more than two bands; or
the antenna port state of the preceding uplink transmission of the terminal device is a one-port uplink transmission on the at least one carrier on the target band, and the terminal device does not support a two-port uplink transmission in the target band.

5. The method according to claim 2, wherein the uplink transmitter switching option configuration information configures the uplink transmitter switching option as the dual uplink, and the preset condition is that:
the antenna port state of the preceding uplink transmission of the terminal device is a one-port uplink transmission on at least one carrier on at least one of a first band and a second band, and the terminal device supports a one-port uplink transmission in the first band and the second band; and
the antenna port state of the current uplink transmission of the terminal device is a one-port uplink transmission on at least one carrier on a third band, and there is no uplink transmission on the first band and the second band,
wherein the first band, the second band and the third band are different bands of the more than two bands.

6. The method according to claim 2, wherein the uplink transmitter switching option configuration information configures the uplink transmitter switching option as the dual uplink, and the preset condition is that:
the antenna port state of the preceding uplink transmission of the terminal device is a one-port uplink transmission on at least one carrier on at least one of a first band and a second band, and the terminal device supports a one-port uplink transmission in the first band and the second band; and
the antenna port state of the current uplink transmission of the terminal device is a one-port uplink transmission on at least one carrier on a first target band and a one-port uplink transmission on at least one carrier on a second target band, and at least one of the first target band and the second target band is a different band from the first band and the second band,
wherein the first band, the second band, the first target band, and the second target band are bands of the more than two bands.

7. The method according to claim 2, wherein the uplink transmitter switching option configuration information configures the uplink transmitter switching option as the dual uplink, and the preset condition is that:
the antenna port state of the current uplink transmission of the terminal device is a two-port uplink transmission on at least one carrier on a target band, and
the antenna port state of the preceding uplink transmission of the terminal device is a one-port or two-port uplink transmission on at least one carrier on a first band,
wherein the target band and the first band are different bands of the more than two bands.

8. The method according to claim 2, wherein the uplink transmitter switching option configuration information configures the uplink transmitter switching option as the dual uplink, and the preset condition is that:
the antenna port state of the current uplink transmission of the terminal device is a one-port uplink transmission on at least one carrier on a target band; and
the antenna port state of the preceding uplink transmission of the terminal device is a one-port uplink transmission on at least one carrier on a first band, and the terminal device supports a two-port uplink transmission in the first band; or
the antenna port state of the preceding uplink transmission of the terminal device is a two-port uplink transmission on the at least one carrier on the first band,
wherein the target band and the first band are different bands of the more than two bands.

9. The method according to any one of claims 3 to 8, further comprising, before determining the antenna port state of the current uplink transmission of the terminal device and the antenna port state of the preceding uplink transmission of the terminal device:
determining an initial state of an antenna port of the uplink transmission of the terminal device,
wherein the initial state is a state of supporting a two-port uplink transmission on at least one carrier in one preset band, and the one preset band is a band of the more than two bands; or
the initial state is a state of respectively supporting a one-port uplink transmission in two preset bands, and the two preset bands are bands of the more than two bands.

10. The method according to claim 9, wherein the one preset band or the two preset bands are pre-set in a protocol or configured to the terminal device through the network device.

11. The method according to claim 2, wherein the uplink transmitter switching option configuration information configures the uplink transmitter switching option as the switched uplink, and the preset condition is that:
the antenna port state of the current uplink transmission of the terminal device is a one-port or two-port uplink transmission on at least one carrier on a target band, and
the antenna port state of the preceding uplink transmission of the terminal device is a one-port or two-port uplink transmission on at least one carrier on a first band,
wherein the target band and the first band are different bands of the more than two bands.

12. The method according to claim 11, further comprising, before determining the antenna port state of the current uplink transmission of the terminal device and the antenna port state of the preceding uplink transmission of the terminal device:
determining an initial state of an antenna port of the uplink transmission of the terminal device, the initial state being a state of supporting a two port uplink transmission on at least one carrier in a preset band, and the preset band being a band of the more than two bands.

13. The method according to claim 12, wherein the preset band is pre-set in a protocol or configured to the terminal device through the network device.

14. The method according to claim 1 or 2, further comprising, before determining the antenna port state of the current uplink transmission of the terminal device and the antenna port state of the preceding uplink transmission of the terminal device:
receiving capability information of the terminal device, wherein the capability information comprises one or more of: an uplink transmitter switching option supported by the terminal device being dual uplink or switched uplink, information of the more than two bands, and the terminal device supporting two uplink transmitters in each of the more than two bands; and
transmitting uplink transmitter switching configuration information to the terminal device, the uplink transmitter switching configuration information comprising one or more of: configuration information of the more than two bands and transmitter switching mode configuration information, wherein the transmitter switching mode configuration information configures the terminal device to support two uplink transmitters in each of the more than two bands.

15. The method according to claim 1, further comprising: if the antenna port state of the current uplink transmission of the terminal device and the antenna port state of the preceding uplink transmission of the terminal device do not meet the preset condition, not needing to set the switching gap.

16. An uplink transmitter switching method applied to a terminal device, comprising:
determining an antenna port state of a current uplink transmission and an antenna port state of a preceding uplink transmission, wherein an uplink transmission band for an uplink transmitter of the terminal device is dynamically switched among more than two bands; and
if the antenna port state of the current uplink transmission and the antenna port state of the preceding uplink transmission meet a preset condition, a switching gap existing for the uplink transmitter to switch the uplink transmission band; and
omitting transmission of uplink information during the switching gap.

17. A network device, comprising:
a first port state determining module, configured to determine an antenna port state of a current uplink transmission of a terminal device and an antenna port state of a preceding uplink transmission of the terminal device, wherein an uplink transmission band for an uplink transmitter of the terminal device is dynamically switched among more than two bands;
a first switching gap determining module, configured to, if the antenna port state of the current uplink transmission of the terminal device and the antenna port state of the preceding uplink transmission of the terminal device meet a preset condition, a switching gap exists for the uplink transmitter to switch the uplink transmission band; and
a first performing module, configured to omit reception of uplink information in the switching gap.

18. A terminal device, comprising:
a second port state determining module, configured to determine an antenna port state of a current uplink transmission and an antenna port state of a preceding uplink transmission, wherein an uplink transmission band for an uplink transmitter of the terminal device is dynamically switched among more than two bands; and
a second switching gap determining module, configured to, if the antenna port state of the current uplink transmission and the antenna port state of the preceding uplink transmission meet a preset condition, a switching gap exists for the uplink transmitter to switch the uplink transmission band; and
a second performing module, configured to omit transmission of uplink information during the switching gap.

19. A communication system, wherein the communication system comprises a network device and a terminal device,
the network device is configured to:
determine an antenna port state of a current uplink transmission of the terminal device and an antenna port state of a preceding uplink transmission of the terminal device, wherein a band for an uplink transmitter of the terminal device is dynamically switched among more than two bands;
if the antenna port state of the current uplink transmission of the terminal device and the antenna port state of the preceding uplink transmission of the terminal device meet a preset condition, a switching gap exists for the uplink transmitter to switch the uplink transmission band; and
omit reception of uplink information during the switching gap, and
the terminal device is configured to:
determine the antenna port state of the current uplink transmission and the antenna port state of the preceding uplink transmission, wherein the band for the uplink transmitter of the terminal device is dynamically switched among the more than two bands; and
if the antenna port state of the current uplink transmission and the antenna port state of the preceding uplink transmission meet the preset condition, the switching gap exists for the uplink transmitter to switch the uplink transmission band; and
omit transmission of the uplink information during the switching gap.

20. An electronic device, comprising a processor and a memory for storing executable instructions of the processor, wherein the processor is configured to perform, by executing the executable instructions, the uplink transmitter switching method according to any one of claims 1 to 15 or the uplink transmitter switching method according to claim 16.

21. A computer-readable storage medium having stored thereon a computer program, wherein the computer program, when being executed by a processor, implements the uplink transmitter switching method according to any one of claims 1 to 15 or the uplink transmitter switching method according to claim 16.

22. A computer program product comprising a computer program, wherein the computer program, when being executed by a processor, implements the uplink transmitter switching method according to any one of claims 1 to 15 or the uplink transmitter switching method according to claim 16.

## Amended claims

### Amended claims under Art. 19.1 PCT

1. An uplink transmitter switching method applied to a network device, comprising:
determining an antenna port state of a current uplink transmission of a terminal device and an antenna port state of a preceding uplink transmission of the terminal device, wherein an uplink transmission band for an uplink transmitter of the terminal device is dynamically switched among more than two bands;
if the antenna port state of the current uplink transmission of the terminal device and the antenna port state of the preceding uplink transmission of the terminal device meet a preset condition, a switching gap existing for the uplink transmitter to switch the uplink transmission band; and
omitting reception of uplink information during the switching gap.

2. The method according to claim 1, further comprising, before determining the antenna port state of the current uplink transmission of the terminal device and the antenna port state of the preceding uplink transmission of the terminal device:
transmitting uplink transmitter switching option configuration information to the terminal device, the uplink transmitter switching option configuration information configuring an uplink transmitter switching option as switched uplink or dual uplink.

3. The method according to claim 2, wherein the uplink transmitter switching option configuration information configures the uplink transmitter switching option as the dual uplink, and the preset condition is that:
the antenna port state of the current uplink transmission of the terminal device is a one-port uplink transmission on at least one carrier on a first band and a one-port uplink transmission on at least one carrier on a second band, wherein the first band and the second band are different bands of the more than two bands; and
the antenna port state of the preceding uplink transmission of the terminal device is a one-port or two-port uplink transmission on at least one carrier on one band of the more than two bands, and the terminal device supports a two-port uplink transmission in the one band.

4. The method according to claim 2, wherein the uplink transmitter switching option configuration information configures the uplink transmitter switching option as the dual uplink, and the preset condition is that:
the antenna port state of the current uplink transmission of the terminal device is a two-port uplink transmission on at least one carrier on a target band, and
the antenna port state of the preceding uplink transmission of the terminal device is at least one of a one-port uplink transmission on at least one carrier on a first band and a one-port uplink transmission on at least one carrier on a second band, and the terminal device supports a one-port uplink transmission in the first band and the second band, wherein at least one of the first band and the second band is different from the target band, and the target band, the first band and the second band are bands of the more than two bands; or
the antenna port state of the preceding uplink transmission of the terminal device is a one-port uplink transmission on the at least one carrier on the target band, and the terminal device does not support a two-port uplink transmission in the target band.

5. The method according to claim 2, wherein the uplink transmitter switching option configuration information configures the uplink transmitter switching option as the dual uplink, and the preset condition is that:
the antenna port state of the preceding uplink transmission of the terminal device is a one-port uplink transmission on at least one carrier on at least one of a first band and a second band, and the terminal device supports a one-port uplink transmission in the first band and the second band; and
the antenna port state of the current uplink transmission of the terminal device is a one-port uplink transmission on at least one carrier on a third band, and there is no uplink transmission on the first band and the second band,
wherein the first band, the second band and the third band are different bands of the more than two bands.

6. The method according to claim 2, wherein the uplink transmitter switching option configuration information configures the uplink transmitter switching option as the dual uplink, and the preset condition is that:
the antenna port state of the preceding uplink transmission of the terminal device is a one-port uplink transmission on at least one carrier on at least one of a first band and a second band, and the terminal device supports a one-port uplink transmission in the first band and the second band; and
the antenna port state of the current uplink transmission of the terminal device is a one-port uplink transmission on at least one carrier on a first target band and a one-port uplink transmission on at least one carrier on a second target band, and at least one of the first target band and the second target band is a different band from the first band and the second band,
wherein the first band, the second band, the first target band, and the second target band are bands of the more than two bands.

7. The method according to claim 2, wherein the uplink transmitter switching option configuration information configures the uplink transmitter switching option as the dual uplink, and the preset condition is that:
the antenna port state of the current uplink transmission of the terminal device is a two-port uplink transmission on at least one carrier on a target band, and
the antenna port state of the preceding uplink transmission of the terminal device is a one-port or two-port uplink transmission on at least one carrier on a first band,
wherein the target band and the first band are different bands of the more than two bands.

8. The method according to claim 2, wherein the uplink transmitter switching option configuration information configures the uplink transmitter switching option as the dual uplink, and the preset condition is that:
the antenna port state of the current uplink transmission of the terminal device is a one-port uplink transmission on at least one carrier on a target band; and
the antenna port state of the preceding uplink transmission of the terminal device is a one-port uplink transmission on at least one carrier on a first band, and the terminal device supports a two-port uplink transmission in the first band; or
the antenna port state of the preceding uplink transmission of the terminal device is a two-port uplink transmission on the at least one carrier on the first band,
wherein the target band and the first band are different bands of the more than two bands.

9. The method according to any one of claims 3 to 8, further comprising, before determining the antenna port state of the current uplink transmission of the terminal device and the antenna port state of the preceding uplink transmission of the terminal device:
determining an initial state of an antenna port of the uplink transmission of the terminal device,
wherein the initial state is a state of supporting a two-port uplink transmission on at least one carrier in one preset band, and the one preset band is a band of the more than two bands; or
the initial state is a state of respectively supporting a one-port uplink transmission in two preset bands, and the two preset bands are bands of the more than two bands.

10. The method according to claim 9, wherein the one preset band or the two preset bands are pre-set in a protocol or configured to the terminal device through the network device.

11. The method according to claim 2, wherein the uplink transmitter switching option configuration information configures the uplink transmitter switching option as the switched uplink, and the preset condition is that:
the antenna port state of the current uplink transmission of the terminal device is a one-port or two-port uplink transmission on at least one carrier on a target band, and
the antenna port state of the preceding uplink transmission of the terminal device is a one-port or two-port uplink transmission on at least one carrier on a first band,
wherein the target band and the first band are different bands of the more than two bands.

12. The method according to claim 11, further comprising, before determining the antenna port state of the current uplink transmission of the terminal device and the antenna port state of the preceding uplink transmission of the terminal device:
determining an initial state of an antenna port of the uplink transmission of the terminal device, the initial state being a state of supporting a two port uplink transmission on at least one carrier in a preset band, and the preset band being a band of the more than two bands.

13. The method according to claim 12, wherein the preset band is pre-set in a protocol or configured to the terminal device through the network device.

14. The method according to claim 1 or 2, further comprising, before determining the antenna port state of the current uplink transmission of the terminal device and the antenna port state of the preceding uplink transmission of the terminal device:
receiving capability information of the terminal device, wherein the capability information comprises one or more of: an uplink transmitter switching option supported by the terminal device being dual uplink or switched uplink, information of the more than two bands, and the terminal device supporting two uplink transmitters in each of the more than two bands; and
transmitting uplink transmitter switching configuration information to the terminal device, the uplink transmitter switching configuration information comprising one or more of: configuration information of the more than two bands and transmitter switching mode configuration information, wherein the transmitter switching mode configuration information configures the terminal device to support two uplink transmitters in each of the more than two bands.

15. The method according to claim 1, further comprising: if the antenna port state of the current uplink transmission of the terminal device and the antenna port state of the preceding uplink transmission of the terminal device do not meet the preset condition, not needing to set the switching gap.

16. An uplink transmitter switching method applied to a terminal device, comprising:
determining an antenna port state of a current uplink transmission and an antenna port state of a preceding uplink transmission, wherein an uplink transmission band for an uplink transmitter of the terminal device is dynamically switched among more than two bands; and
if the antenna port state of the current uplink transmission and the antenna port state of the preceding uplink transmission meet a preset condition, a switching gap existing for the uplink transmitter to switch the uplink transmission band; and
omitting transmission of uplink information during the switching gap.

17. The method according to claim 16, further comprising, before determining the antenna port state of the current uplink transmission of the terminal device and the antenna port state of the preceding uplink transmission of the terminal device:
receiving uplink transmitter switching option configuration information transmitted by a network device, the uplink transmitter switching option configuration information configuring an uplink transmitter switching option as switched uplink or dual uplink.

18. The method according to claim 17, wherein the uplink transmitter switching option configuration information configures the uplink transmitter switching option as the dual uplink, and the preset condition is that:
the antenna port state of the current uplink transmission of the terminal device is a one-port uplink transmission on at least one carrier on a first band and a one-port uplink transmission on at least one carrier on a second band, wherein the first band and the second band are different bands of the more than two bands; and
the antenna port state of the preceding uplink transmission of the terminal device is a one-port or two-port uplink transmission on at least one carrier on one band of the more than two bands, and the terminal device supports a two-port uplink transmission in the one band.

19. The method according to claim 17, wherein the uplink transmitter switching option configuration information configures the uplink transmitter switching option as the dual uplink, and the preset condition is that:
the antenna port state of the current uplink transmission of the terminal device is a two-port uplink transmission on at least one carrier on a target band, and
the antenna port state of the preceding uplink transmission of the terminal device is at least one of a one-port uplink transmission on at least one carrier on a first band and a one-port uplink transmission on at least one carrier on a second band, and the terminal device supports a one-port uplink transmission in the first band and the second band, wherein at least one of the first band and the second band is different from the target band, and the target band, the first band and the second band are bands of the more than two bands; or
the antenna port state of the preceding uplink transmission of the terminal device is a one-port uplink transmission on the at least one carrier on the target band, and the terminal device does not support a two-port uplink transmission in the target band.

20. The method according to claim 17, wherein the uplink transmitter switching option configuration information configures the uplink transmitter switching option as the dual uplink, and the preset condition is that:
the antenna port state of the preceding uplink transmission of the terminal device is a one-port uplink transmission on at least one carrier on at least one of a first band and a second band, and the terminal device supports a one-port uplink transmission in the first band and the second band; and
the antenna port state of the current uplink transmission of the terminal device is a one-port uplink transmission on at least one carrier on a third band, and there is no uplink transmission on the first band and the second band,
wherein the first band, the second band and the third band are different bands of the more than two bands.

21. The method according to claim 17, wherein the uplink transmitter switching option configuration information configures the uplink transmitter switching option as the dual uplink, and the preset condition is that:
the antenna port state of the preceding uplink transmission of the terminal device is a one-port uplink transmission on at least one carrier on at least one of a first band and a second band, and the terminal device supports a one-port uplink transmission in the first band and the second band; and
the antenna port state of the current uplink transmission of the terminal device is a one-port uplink transmission on at least one carrier on a first target band and a one-port uplink transmission on at least one carrier on a second target band, and at least one of the first target band and the second target band is a different band from the first band and the second band,
wherein the first band, the second band, the first target band, and the second target band are bands of the more than two bands.

22. The method according to claim 17, wherein the uplink transmitter switching option configuration information configures the uplink transmitter switching option as the dual uplink, and the preset condition is that:
the antenna port state of the current uplink transmission of the terminal device is a two-port uplink transmission on at least one carrier on a target band, and
the antenna port state of the preceding uplink transmission of the terminal device is a one-port or two-port uplink transmission on at least one carrier on a first band,
wherein the target band and the first band are different bands of the more than two bands.

23. The method according to claim 17, wherein the uplink transmitter switching option configuration information configures the uplink transmitter switching option as the dual uplink, and the preset condition is that:
the antenna port state of the current uplink transmission of the terminal device is a one-port uplink transmission on at least one carrier on a target band; and
the antenna port state of the preceding uplink transmission of the terminal device is a one-port uplink transmission on at least one carrier on a first band, and the terminal device supports a two-port uplink transmission in the first band; or
the antenna port state of the preceding uplink transmission of the terminal device is a two-port uplink transmission on the at least one carrier on the first band,
wherein the target band and the first band are different bands of the more than two bands.

24. The method according to any one of claims 18 to 23, further comprising, before determining the antenna port state of the current uplink transmission and the antenna port state of the preceding uplink transmission:
determining an initial state of an antenna port of the uplink transmission of the terminal device,
wherein the initial state is a state of supporting a two-port uplink transmission on at least one carrier in one preset band, and the one preset band is a band of the more than two bands; or
the initial state is a state of respectively supporting a one-port uplink transmission in two preset bands, and the two preset bands are bands of the more than two bands.

25. The method according to claim 24, wherein the one preset band or the two preset bands are pre-set in a protocol or configured to the terminal device through the network device.

26. The method according to claim 17, wherein the uplink transmitter switching option configuration information configures the uplink transmitter switching option as the switched uplink, and the preset condition is that:
the antenna port state of the current uplink transmission of the terminal device is a one-port or two-port uplink transmission on at least one carrier on a target band, and
the antenna port state of the preceding uplink transmission of the terminal device is a one-port or two-port uplink transmission on at least one carrier on a first band,
wherein the target band and the first band are different bands of the more than two bands.

27. The method according to claim 26, further comprising, before determining the antenna port state of the current uplink transmission and the antenna port state of the preceding uplink transmission:
determining an initial state of an antenna port of the uplink transmission of the terminal device, the initial state being a state of supporting a two port uplink transmission on at least one carrier in a preset band, and the preset band being a band of the more than two bands.

28. The method according to claim 27, wherein the preset band is pre-set in a protocol or configured to the terminal device through the network device.

29. The method according to claim 16 or 17, further comprising, before determining the antenna port state of the current uplink transmission and the antenna port state of the preceding uplink transmission:
transmitting capability information of the terminal device to a network device, wherein the capability information comprises one or more of: an uplink transmitter switching option supported by the terminal device being dual uplink or switched uplink, information of the more than two bands, and the terminal device supporting two uplink transmitters in each of the more than two bands; and
receiving uplink transmitter switching configuration information transmitted by the network device, the uplink transmitter switching configuration information comprising one or more of: configuration information of the more than two bands and transmitter switching mode configuration information, wherein the transmitter switching mode configuration information configures the terminal device to support two uplink transmitters in each of the more than two bands.

30. The method according to claim 16, further comprising: if the antenna port state of the current uplink transmission of the terminal device and the antenna port state of the preceding uplink transmission of the terminal device do not meet the preset condition, not needing to set the switching gap.

31. A network device, comprising:
a first port state determining module, configured to determine an antenna port state of a current uplink transmission of a terminal device and an antenna port state of a preceding uplink transmission of the terminal device, wherein an uplink transmission band for an uplink transmitter of the terminal device is dynamically switched among more than two bands;
a first switching gap determining module, configured to, if the antenna port state of the current uplink transmission of the terminal device and the antenna port state of the preceding uplink transmission of the terminal device meet a preset condition, a switching gap exists for the uplink transmitter to switch the uplink transmission band; and
a first performing module, configured to omit reception of uplink information in the switching gap.

32. A terminal device, comprising:
a second port state determining module, configured to determine an antenna port state of a current uplink transmission and an antenna port state of a preceding uplink transmission, wherein an uplink transmission band for an uplink transmitter of the terminal device is dynamically switched among more than two bands; and
a second switching gap determining module, configured to, if the antenna port state of the current uplink transmission and the antenna port state of the preceding uplink transmission meet a preset condition, a switching gap exists for the uplink transmitter to switch the uplink transmission band; and
a second performing module, configured to omit transmission of uplink information during the switching gap.

33. A communication system, wherein the communication system comprises a network device and a terminal device,
the network device is configured to:
determine an antenna port state of a current uplink transmission of the terminal device and an antenna port state of a preceding uplink transmission of the terminal device, wherein a band for an uplink transmitter of the terminal device is dynamically switched among more than two bands;
if the antenna port state of the current uplink transmission of the terminal device and the antenna port state of the preceding uplink transmission of the terminal device meet a preset condition, a switching gap exists for the uplink transmitter to switch the uplink transmission band; and
omit reception of uplink information during the switching gap, and
the terminal device is configured to:
determine the antenna port state of the current uplink transmission and the antenna port state of the preceding uplink transmission, wherein the band for the uplink transmitter of the terminal device is dynamically switched among the more than two bands; and
if the antenna port state of the current uplink transmission and the antenna port state of the preceding uplink transmission meet the preset condition, the switching gap exists for the uplink transmitter to switch the uplink transmission band; and
omit transmission of the uplink information during the switching gap.

34. An electronic device, comprising a processor and a memory for storing executable instructions of the processor, wherein the processor is configured to perform, by executing the executable instructions, the uplink transmitter switching method according to any one of claims 1 to 15 or the uplink transmitter switching method according to any one of claims 16 to 30.

35. A computer-readable storage medium having stored thereon a computer program, wherein the computer program, when being executed by a processor, implements the uplink transmitter switching method according to any one of claims 1 to 15 or the uplink transmitter switching method according to any one of claims 16 to 30.

36. A computer program product comprising a computer program, wherein the computer program, when being executed by a processor, implements the uplink transmitter switching method according to any one of claims 1 to 15 or the uplink transmitter switching method according to any one of claims 16 to 30.
